# EUROPEAN PATENT APPLICATION

(11) **EP 2 816 483 A1**
(43) Date of publication of application: **24.12.2014**
(21) Application number: 14169975.1
(22) Date of filing: 27.05.2014
(51) Int. Cl.: G06F 12/02

(54) **Information processing apparatus, control circuit, and control method**

(30) Priority: 17.06.2013 JP 2013127016
(71) Applicant: FUJITSU LIMITED, Kawasaki-shi, Kanagawa 211-8588 (JP)
(72) Inventor: Higeta, Masanori, Kanagawa, 211-8588 (JP); Takaku, Kazuya, Kanagawa, 211-8588 (JP); Hayasaka, Kazumi, Kanagawa, 211-8588 (JP); Akiu, Susumu, Kanagawa, 211-8588 (JP)
(74) Representative: Hoffmann Eitle

(57) **Abstract**

An information processing apparatus includes: a storage device that includes a plurality of storage areas; a selection unit that selects a logical address identifying data stored in the storage device; an acquisition unit that acquires a physical address associated with the selected logical address, from a conversion table storing therein the logical addresses and physical addresses identifying the storage areas in which the data is stored in association with each other; a determination unit that determines whether the stored data indicated by the acquired physical address is to be transferred; a transfer unit that transfers the stored data to another storage area when the determination unit determines that the data is to be transferred; and an updating unit that updates the physical address associated with the selected logical address in the conversion table to the physical address indicating the other storage area.

## Description

### FIELD

The embodiments discussed herein are related to an information processing apparatus, a control circuit, and a control method.

### BACKGROUND

Information processing apparatuses have been known that use non-volatile memories operating at higher speed than magnetic disks. As an example of such information processing systems, an information processing apparatus has been known that uses a NAND flash memory device as a storage device such as a storage. In the following description, the NAND flash memory device is described as the NAND device.

The NAND device writes and reads data, and transfers data in relation to updating of data, on a physical page basis, while it erases data on a physical block basis. A physical page serves as a storage area of the data. A physical block includes a plurality of physical pages. The NAND device thus includes a physical block in which valid data and invalid data are mixed in some cases. An element of the NAND device deteriorates when data is erased. A deterioration speed of the element differs between the physical page including data that is frequently updated and the physical page including data that is not frequently updated.

A NAND controller has been known that transfers data written in each physical block in accordance with a writing condition of the data and a time when the data is written in the physical block to organize data and level the deterioration. For example, the NAND controller includes a management information table that stores therein, for each physical block, information indicating whether data of each physical page is valid and information indicating the time when data is last written.

The NAND controller refers to the management information table and determines, for each physical block, whether data is transferred on the basis of the number of pieces of valid data and an elapsed time from the writing of the data. When determining that the data is transferred, the NAND controller then transfers valid data written in the physical block to a physical page of a reserve block and erases the data of the selected physical block, thereby reserving a new reserve block and leveling the deterioration.

The NAND controller includes an address conversion table that converts a logical address used for designating data by a system executed by the information processing apparatus into a physical address indicating the physical page in which the data is stored. The NAND controller updates the address conversion table using the physical addresses indicating a transfer source and a transfer destination of the data when the data is transferred.

For example, the NAND controller inverse-converts the physical address indicating the transfer source of the data into the logical address using an address inverse-conversion table that inverse-converts a physical address into a logical address. Among the physical addresses stored in the address conversion table, the NAND controller then rewrites the physical address having the inverse-converted logical address as an index, to the physical address indicating the transfer destination of the data. Conventional technologies are described in Japanese Laid-open Patent Publication No. 2009-003784 and Japanese Laid-open Patent Publication No. 2010-157141, for example.

In the above-described technique that determines whether data is transferred on a physical block basis, the address conversion table is updated using the physical addresses indicating the transfer source and the transfer destination of the data. For performing such processing, the NAND controller has a problem of an increase in circuit scale because the NAND controller includes the address inverse-conversion table that inverse-converts the physical address indicating the transfer source of the data into the logical address, for example.

Accordingly, it is an object in one aspect of an embodiment of the invention to provide an information processing apparatus, a control circuit, a control program, and a control method that can reduce the circuit scale of the NAND controller.

### SUMMARY

According to an aspect of an embodiment, an information processing apparatus includes: a storage device that includes a plurality of storage areas; a selection unit that selects a logical address from among logical addresses identifying data stored in the storage device; an acquisition unit that acquires a physical address associated with the logical address selected by the selection unit, from a conversion table storing therein the logical addresses identifying data stored in the storage device and physical addresses identifying the storage areas in which the data is stored in association with each other; a determination unit that determines, using a predetermined condition, whether the data stored in the storage area indicated by the physical address acquired by the acquisition unit is to be transferred; a transfer unit that transfers the data stored in the storage area indicated by the physical address acquired by the acquisition unit to another storage area when the determination unit determines that the data is to be transferred; and an updating unit that updates the physical address associated with the logical address selected by the selection unit out of the physical addresses stored in the conversion table to the physical address indicating the other storage area.

### BRIEF DESCRIPTION OF DRAWINGS

FIG. 1 is a schematic diagram explaining an information processing apparatus according to a first embodiment;
FIG. 2 is a schematic diagram explaining an example of memory access;
FIG. 3 is a schematic diagram explaining an example of processing performed by a related NAND controller;
FIG. 4 is a schematic diagram explaining an example of a management information table included in the related NAND controller;
FIG. 5 is a schematic diagram explaining an example of processing performed by a NAND controller according to the first embodiment;
FIG. 6 is a schematic diagram explaining a functional structure of the NAND controller according to the first embodiment;
FIG. 7 is a schematic diagram explaining an example of an address conversion table according to the first embodiment;
FIG. 8 is a schematic diagram explaining an example of a management information table according to the first embodiment;
FIG. 9 is a schematic diagram explaining an example of the processing performed by the NAND controller according to the first embodiment;
FIG. 10 is a flowchart explaining an overview of the processing performed by the NAND controller according to the first embodiment;
FIG. 11 is a flowchart explaining a flow of cyclic reference control performed by the NAND controller according to the first embodiment;
FIG. 12 is a schematic diagram explaining a functional structure of a NAND controller according to a second embodiment;
FIG. 13 is a first flowchart explaining a flow of processing performed by the NAND controller according to the second embodiment;
FIG. 14 is a second flowchart explaining a flow of the processing performed by the NAND controller according to the second embodiment;
FIG. 15 is a schematic diagram explaining a functional structure of a NAND controller according to a third embodiment;
FIG. 16 is a schematic diagram explaining an example of a management information table according to the third embodiment;
FIG. 17 is a schematic diagram explaining processing performed by the NAND controller according to the third embodiment and status transition of a physical block;
FIG. 18 is a schematic diagram explaining a variation of the management information table according to the third embodiment;
FIG. 19 is a flowchart explaining a flow of the processing performed by the NAND controller according to the third embodiment; and
FIG. 20 is a schematic diagram explaining an example of a NAND controller that executes a control program.

### DESCRIPTION OF EMBODIMENTS

Preferred embodiments of the present invention will be explained with reference to accompanying drawings. The disclosed technique, however, is not limited to the following embodiments. The embodiments may be performed in any combination of them without inconsistency among them.

### [a] First embodiment

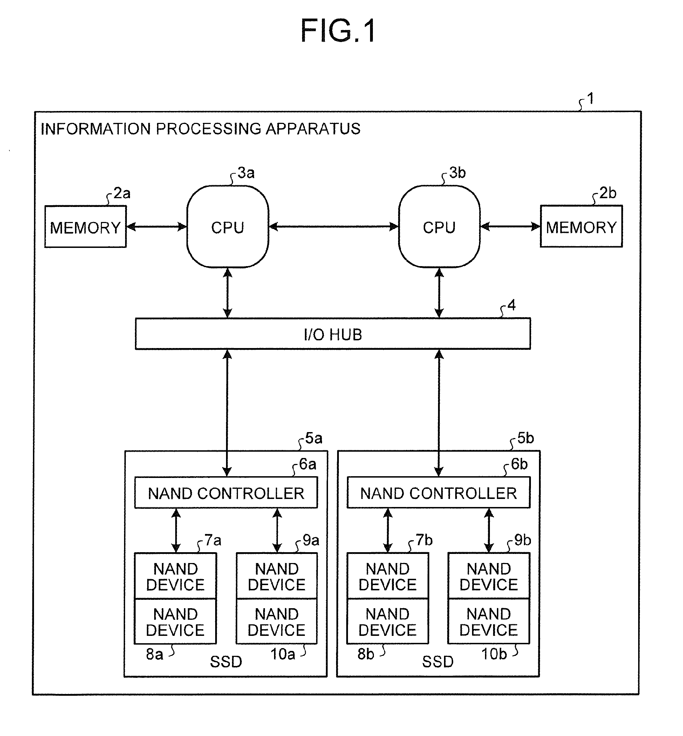

In a first embodiment, an example of the information processing apparatus according to the invention is described with reference to FIG. 1. FIG. 1 is a schematic diagram explaining an information processing apparatus according to the first embodiment. In the example illustrated in FIG. 1, an information processing apparatus 1 includes a plurality of memories 2a and 2b, a plurality of central processing units (CPUs) 3a and 3b, an input-output (I/O) hub 4, and a plurality of solid state drives (SSDs) 5a and 5b. The SSD 5a includes a NAND controller 6a and a plurality of NAND devices 7a to 10a.

The SSD 5b includes a NAND controller 6b and a plurality of NAND devices 7b to 10b. In the following description, the descriptions of the NAND controller 6b and the NAND devices 7b to 10b are omitted because they function in the same manner as the NAND controller 6a and the NAND devices 7a to 10a.

The memories 2a and 2b are storage devices that store therein data used by the CPUs 3a and 3b for arithmetic processing. The CPUs 3a and 3b are arithmetic processing devices that perform various types of arithmetic processing using the data stored in the memories 2a and 2b. The CPUs 3a and 3b acquire the data stored in the memories 2a and 2b using the non-uniform memory access (NUMA) technique and perform the arithmetic processing using the acquired data, for example.

The CPUs 3a and 3b acquire the data stored in the respective SSDs 5a and 5b through the I/O hub 4 and perform the arithmetic processing using the acquired data. Specifically, the CPU 3a issues a read request and a write request for data to the SSD 5a and reads data from and writes data in the NAND devices 7a to 10a. For example, the CPU 3a issues, to the SSD 5a, a read request that includes a logical address designating data to be read. The CPU 3a issues a write request that includes a logical address designating a writing destination in which data is written and the data to be written.

The NAND device 7a is a non-volatile memory that stores therein various types of data. Specifically, the NAND device 7a includes a plurality of physical pages that serve as storage areas of data and writes data on a physical page basis. The NAND device 7a includes a plurality of physical blocks each having the physical pages and erases data on a block basis. For example, one physical page includes a storage capacity of eight kilobytes while one physical block includes 128 physical pages.

The NAND controller 6a accesses the NAND devices 7a to 10a to read data therefrom or write data therein. For example, the NAND controller 6a includes an address conversion table in which the logical addresses that the respective CPUs 3a and 3b use to designate the storage areas in which the data is stored and the physical addresses indicating the storage areas, in which the data is stored, of the NAND devices 7a to 10a are associated with each other.

When receiving the logical address together with the read request, the NAND controller 6a identifies the physical address associated with the logical address using the address conversion table, and reads the data from the storage area indicated by the identified physical address. The NAND controller 6a then transmits the read data to the CPU 3a through the I/O hub 4.

In the following description, the logical address corresponding to the beginning address of each physical page is described simply as the logical address while the physical address corresponding to the beginning address of each physical page is described simply as the physical address for easy understanding. A system executed by the information processing apparatus 1 issues the read request and the write request to the logical address corresponding to the beginning address of each physical page.

For example, when the NAND devices 7a to 10a include a plurality of blocks each including 2^{q} physical pages, the NAND controller 6a performs the following processing. The NAND controller 6a sets the lower q bits of a logical address as a logical page number that identifies a logical page in one logical block and the upper p bits of the rest logical address as a logical block address that indicates the one logical block.

The NAND controller 6a sets the upper p bits of a physical address as a physical block address that indicates one physical block and the lower q bits of the physical address as a physical page number that identifies the physical page in the one physical block. The NAND controller 6a divides the logical address into the logical block address indicating the logical block and the logical page number indicating the logical page in the logical block. The NAND controller 6a divides the physical address into the physical block address indicating the physical block and the physical page number indicating the physical page in the physical block.

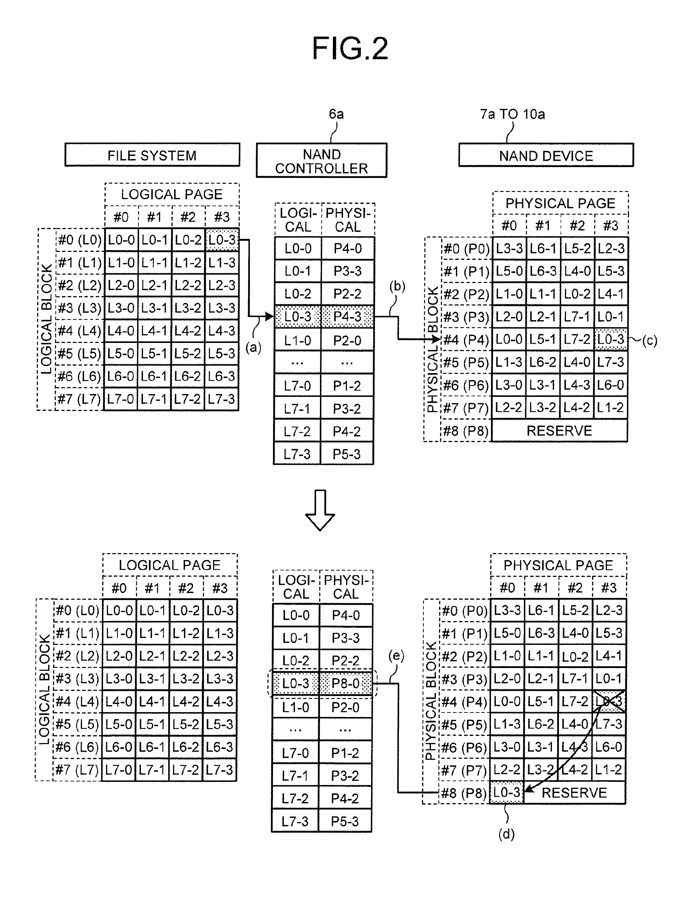

The following describes an example of memory access performed by the NAND controller 6a with reference to FIG. 2. FIG. 2 is a schematic diagram explaining an example of the memory access. In the example illustrated in FIG. 2, the number of blocks is "nine" and the number of physical pages in each block is "four" in the NAND device 7a for easy understanding. In the example illustrated in FIG. 2, processing is described in which the NAND controller 6a writes data in the NAND devices 7a to 10a on a physical page basis using the address conversion table in which the logical block addresses and the physical block addresses are associated with each other.

For example, the NAND controller 6a, from a file system executed by the CPU 3a, issues the write request to the logical page number "3" of the logical block address "L0", that is, the logical address "L0-3" as illustrated with (a) in FIG. 2. The NAND controller 6a then acquires the physical address "P4-3" associated with the logical address "L0-3" using the address conversion table, and identifies the physical page storing therein data before being updated as illustrated with (b) in FIG. 2.

Subsequently, the NAND controller 6a reads the data of the physical page indicated by the physical address "P4-3" as illustrated with (c) in FIG. 2, updates the read data to the data to be written, and stores the updated data in an empty physical page in a reserve block. As a detailed example, the NAND controller 6a stores the updated data in the physical page indicated by the physical address "P8-0" as illustrated with (d) in FIG. 2. Thereafter, the NAND controller 6a updates the physical address "P4-3" associated with the logical address "L0-3" to "P8-0" indicating the physical page of the transfer destination as illustrated with (e) in FIG. 2, and then ends the processing.

When writing and transferring are performed on the data stored in the NAND devices 7a to 10a on a physical page basis, valid data and invalid data may be mixed in one physical block. For example, in the example illustrated in FIG. 2, the NAND controller 6a invalidates the data in the physical block indicated by the physical block address "P4" when updating the data indicated by the logical address "L0-3". The NAND controller 6a then stores the updated data to the physical block indicated by the physical block address "P8". Thus, valid data and invalid data are mixed in the physical block indicated by the physical block address "P4".

The NAND devices 7a to 10a are not capable of overwriting the data on the physical page storing therein the invalid data, thereby writing the data in the reserve block in which data is preliminarily erased. An increase in the number of physical blocks in which valid data and invalid data are mixed, however, makes it difficult to reserve the reserve blocks in which new data is written. The NAND devices 7a to 10a include elements that retain data. Such elements deteriorate at every erasing of data. Further deteriorated elements have difficulty in proper retaining electric charges.

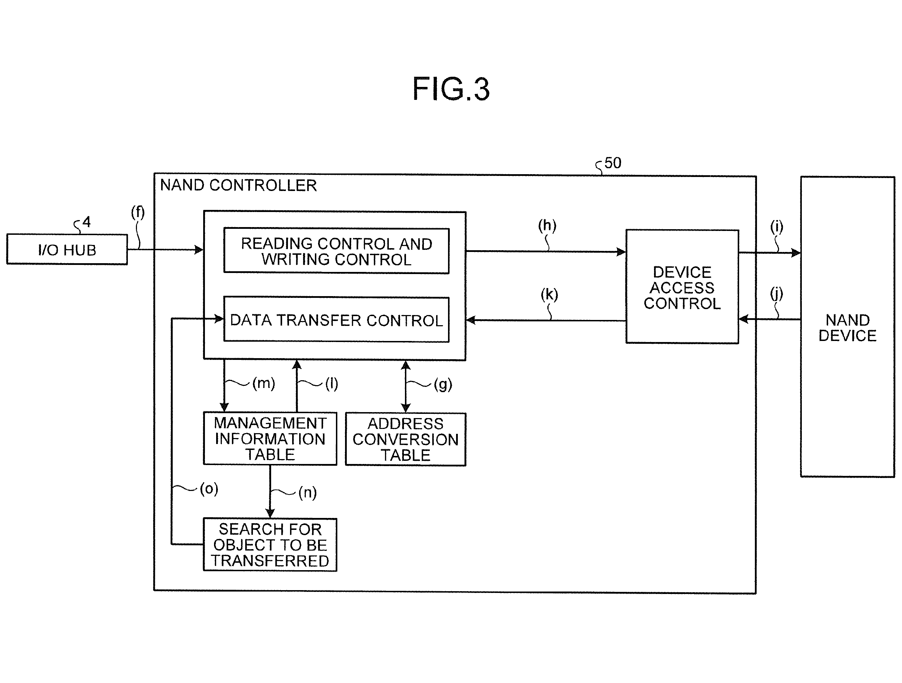

A related NAND controller performs data transfer control that organizes valid data and reserves a new reserve block. The following describes an example of the data transfer control performed by a related NAND controller with reference to FIG. 3. In the following description, the related NAND controller is described as a NAND controller 50.

FIG. 3 is a schematic diagram explaining an example of processing performed by the related NAND controller. For example, the NAND controller 50 includes an address conversion table in which a logical address that a system uses to designate data and the physical address at which the data indicated by the associated logical address is stored are associated with each other. The NAND controller 50 includes a management information table that stores therein a storing state of data and a time when the data is stored in association with each other for each physical block.

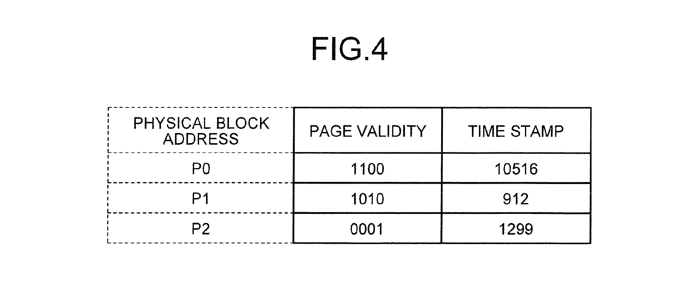

FIG. 4 is a schematic diagram explaining an example of the management information table included in the related NAND controller. As illustrated in FIG. 4, the NAND controller 50 has entries associated with different physical blocks and stores page validity and a time stamp in association with each other in each entry. The page validity is information that indicates whether the data stored in each physical page of the associated physical block is valid. The time stamp is information that indicates a time when data is stored in the associated physical block.

Referring back to FIG. 3, reading control and writing control are described that are performed by the NAND controller 50. For example, the NAND controller 50 receives a read request from the I/O hub 4 as illustrated with (f) in FIG. 3. The NAND controller 50 performs the reading control. For example, the NAND controller 50 converts the logical address into the physical address using the address conversion table as illustrated with (g) in FIG. 3.

The NAND controller 50 performs device access control using the physical address after the conversion as illustrated with (h) in FIG. 3. Specifically, the NAND controller 50 reads data from the storing area indicated by the physical address after the conversion as illustrated with (i) in FIG. 3. As a result, the NAND controller 50 acquires the data to be read as illustrated with (j) in FIG. 3. The NAND controller 50 outputs the acquired data to the CPU that has sent the read request as illustrated with (k) in FIG. 3 after the acquisition of the read data.

When receiving a write request relating to updating of data, the NAND controller 50 converts the logical address into the physical address using the address conversion table and acquires a transfer source physical address at which data before being updated is stored as illustrated with (g) in FIG. 3. The NAND controller 50 refers to the management information table and acquires the physical address of a reserve block storing therein no data as a transfer destination physical address as illustrated with (1) in FIG. 3.

The NAND controller 50 performs the device access control such that the NAND controller 50 reads data from the physical page indicated by the transfer source physical address, updates the data, and thereafter stores the data in the physical page indicated by the transfer destination physical address as illustrated with (h) and (i) in FIG. 3. As a result, the NAND controller 50 acquires a reply to the write request of the data as illustrated with (j) and (k) in FIG. 3. The NAND controller 50 updates the management information table in accordance with the transfer of the data as illustrated with (m) in FIG. 3.

The following describes an example of data transfer control performed by the NAND controller 50. For example, the NAND controller 50 searches for a physical block serving as the data transfer object using the page validity or the time stamp stored in the management information table as illustrated with (n) in FIG. 3. The NAND controller 50 starts the data transfer control as illustrated with (○) in FIG. 3. In the data transfer control, the NAND controller 50 transfers valid data stored in the physical block serving as the data transfer object to a reserve block, and erases the data of the physical block serving as the transfer source to reserve the physical block as a new reserve block.

For example, the NAND controller 50 refers to each page validity in the management information table when performing garbage collection processing that organizes valid data and thus reserves a new reserve block. The NAND controller 50 determines whether the number of pieces of valid data is smaller than a certain number for each physical block. The NAND controller 50 sets the physical block that is determined to include valid data the number of which is smaller than the certain number as the data transfer object, and transfers the valid data from the physical block set as the data transfer object to a reserve block.

For another example, the NAND controller 50 refers to each time stamp in the management information table when performing wear leveling processing that levels deterioration of the elements by transferring data from writing of which a certain time has elapsed. The NAND controller 50 compares the referred time stamp with a time stamp indicating the current time for each physical block, and determines whether a certain time has elapsed from the writing of the data. The NAND controller 50 sets the physical block that is determined to include data from writing of which the certain time has elapsed as the data transfer object, and transfers the valid data from the physical block set as the data transfer object to a reserve block.

When performing the data transfer control such as the garbage collection processing and the wear leveling processing, the NAND controller 50 updates the address conversion table in accordance with the transfer of data. The NAND controller 50 determines whether data is transferred using the management information table that manages the page validity and the time stamp for each physical block. Thus, the NAND controller 50 can identify the transfer source physical address of the transferred data but is unable to identify the logical address of the data, after performing the data transfer control.

For example, the NAND controller 50 acquires the physical address from the address conversion table using the logical address as an index when the NAND controller 50 is structured by hardware such as an integrated circuit. However, it is difficult to structure the NAND controller 50 such that the logical address is identified from the address conversion table using the physical address as an index and the physical address associated with the identified logical address is updated.

Thus, the NAND controller 50 includes a unit that inverse-converts the data transfer source physical address into the corresponding logical address. For example, the NAND controller 50 includes an address inverse-conversion table that inverse-converts the physical address into the logical address using the physical address as an index. The NAND controller 50 identifies the logical address corresponding to the data transfer source physical address using the address inverse-conversion table. The NAND controller 50 updates the physical address associated with the identified logical address to the transfer destination physical address among the physical addresses stored in the address conversion table.

The circuit scale of the NAND controller 50, however, increases when the NAND controller 50 includes the unit that inverse-converts the data transfer source physical address into the corresponding logical address such as the address inverse-conversion table. The NAND controller 50 refers to the address conversion table and the address inverse-conversion table and updates the address conversion table at every data transfer control, thereby increasing processing time relating to the transfer of data. As a result, the system performance is lowered.

The NAND controller 6a according to the first embodiment performs the following processing. The NAND controller 6a selects one logical address using any technique. The NAND controller 6a then acquires the physical address associated with the selected logical address from an address conversion table. The NAND controller 6a then determines whether data is transferred from the physical block including the physical page indicated by the acquired physical address using a management information table. When the data is transferred, the NAND controller 6a updates the physical address associated with the selected logical address to the transfer destination physical address among the physical addresses stored in the address conversion table after the transfer.

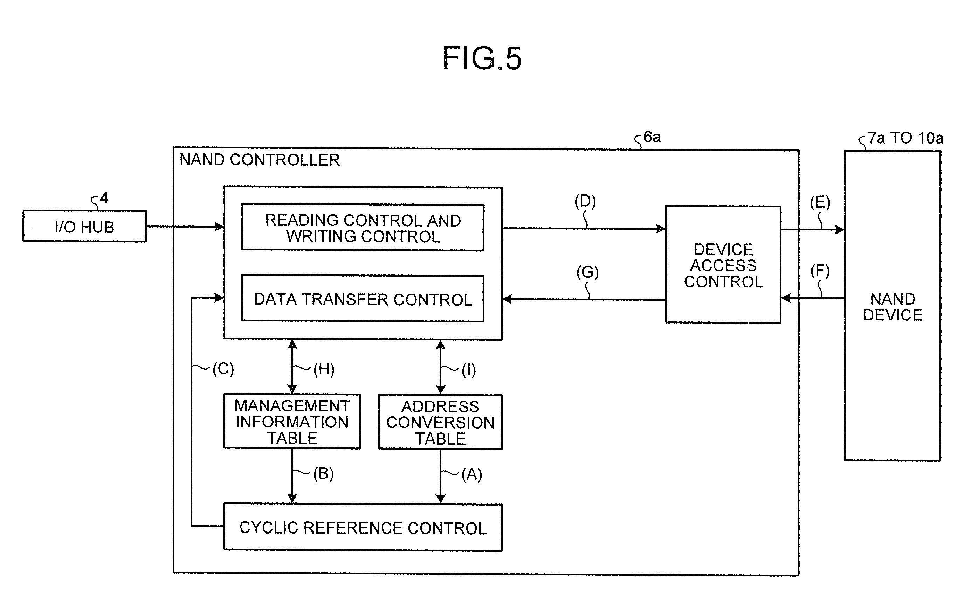

The following describes an example of the processing performed by the NAND controller 6a with reference to FIG. 5. FIG. 5 is a schematic diagram explaining an example of the processing performed by the NAND controller according to the first embodiment. In the example illustrated in FIG. 5, the NAND controller 6a includes the same address conversion table and management information table as those of the related NAND controller 50. In the following description, the descriptions of reading control and writing control performed by the NAND controller 6a are omitted because the NAND controller 6a performs the same control as that of the related NAND controller 50. In the following description, the NAND controller 6a transfers data in the garbage collection processing.

For example, the NAND controller 6a refers to the address conversion table and selects the beginning logical address as illustrated with (A) in FIG. 5. The NAND controller 6a acquires the physical address associated with the selected logical address from the address conversion table and identifies the physical block address from the upper bits of the acquired physical address. The NAND controller 6a refers to the management information table and determines whether data of the physical block is transferred on the basis of the page validity and the time stamp that are associated with the identified physical block address as illustrated with (B) in FIG. 5.

When determining that the data of the physical block is transferred, the NAND controller 6a performs the data transfer control on the first selected logical address as illustrated with (C) in FIG. 5. Specifically, the NAND controller 6a sets the physical address that is associated with the logical address and acquired from the address conversion table as the transfer source physical address. The NAND controller 6a acquires, from the management information table, the physical address of the reserve block as the transfer destination physical address. The NAND controller 6a then performs the data transfer control using the selected logical address, the transfer source physical address, and the transfer destination physical address.

Specifically, the NAND controller 6a performs the device access control relating to the data transfer using the transfer source physical address and the transfer destination physical address as illustrated with (D) in FIG. 5. As a result, the NAND controller 6a transfers the data stored in the physical page indicated by the transfer source physical address to the physical page indicated by the transfer destination physical address as illustrated with (E) in FIG. 5. The NAND controller 6a then receives a reply relating to the data transfer as illustrated with (F) and (G) in FIG. 5.

The NAND controller 6a then updates the management information table in accordance with the transfer of the data as illustrated with (H) in FIG. 5. The NAND controller 6a updates the physical address associated with the selected logical address to the transfer destination physical address among the physical addresses stored in the address conversion table as illustrated with (I) in FIG. 5.

The NAND controller 6a does not determine whether data is transferred for each physical block but determines whether data is transferred for each logical address. Thus, the NAND controller 6a can update the address conversion table without having the address inverse-conversion table that converts the transfer source physical address into the logical address. As a result, the NAND controller 6a can have a reduced circuit scale.

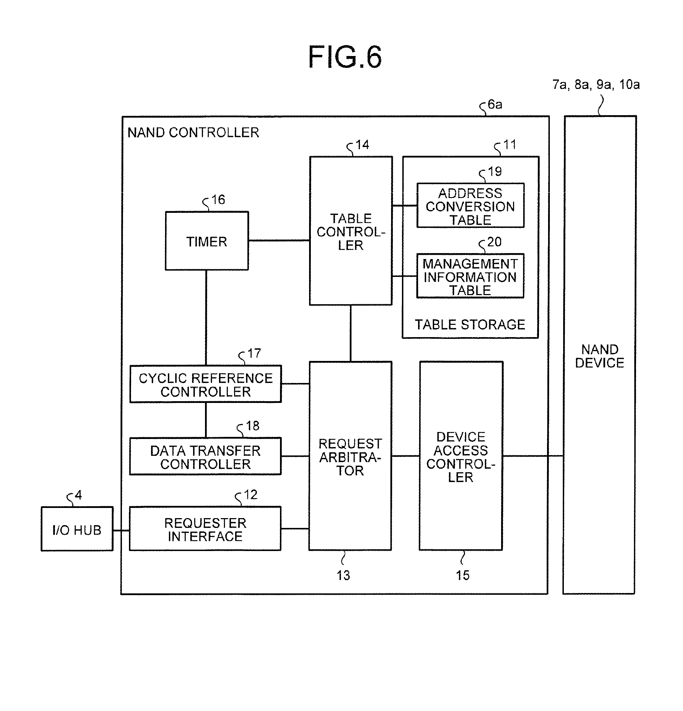

The following describes an example of a functional structure of the NAND controller 6a with reference to FIG. 6. FIG. 6 is a schematic diagram explaining the functional structure of the NAND controller according to the first embodiment. In the example illustrated in FIG. 6, the NAND controller 6a includes a table storage 11, a requester interface 12, a request arbitrator 13, a table controller 14, and a device access controller 15. The NAND controller 6a further includes a timer 16, a cyclic reference controller 17, and a data transfer controller 18. The table storage 11 stores therein an address conversion table 19 and a management information table 20.

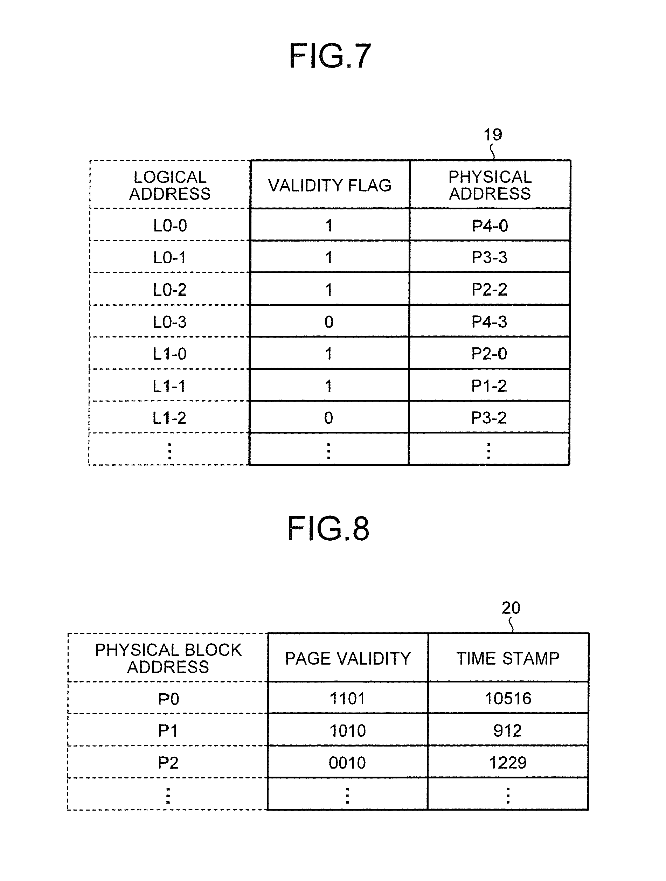

The following describes the address conversion table 19 stored in the table storage 11 and information stored in the management information table 20 with reference to FIGS. 7 and 8. FIG. 7 is a schematic diagram explaining an example of the address conversion table according to the first embodiment. As illustrated in FIG. 7, the address conversion table 19 includes entries for the respective logical addresses. Each of the entries stores therein a validity flag and the physical address at which the data indicated by the logical address is stored, the validity flag and the physical address being in association with each other. The validity flag is a validity bit that indicates whether the data stored in the physical page indicated by the associated physical address is valid data.

For example, in the example of the address conversion table 19 illustrated in FIG. 7, the entry associated with the logical address "L0-0" stores therein the validity flag "1" and the physical address "P4-0" in association with each other. The address conversion table 19 indicates that valid data designated by the logical address "L0-0" is stored in the block indicated by the physical address "P4-0".

Likewise, in the example of the address conversion table 19 illustrated in FIG. 7, the entry associated with the logical address "L0-1" stores therein the validity flag "1" and the physical address "P3-3" in association with each other. In the address conversion table 19, the entry associated with the logical address "L0-2" stores therein the validity flag "1" and the physical address "P2-2" in association with each other. In the address conversion table 19, the entry associated with the logical address "L1-0" stores therein the validity flag "1" and the physical address "P2-0" in association with each other. In the address conversion table 19, the entry associated with the logical address "L1-1" stores therein the validity flag "1" and the physical address "P1-2" in association with each other.

In the address conversion table 19, the entry associated with the logical address "L0-3" stores therein the validity flag "0" and the physical address "P4-3" in association with each other. In the address conversion table 19, the entry associated with the logical address "L1-2" stores therein the validity flag "0" and the physical address "P3-2" in association with each other. The address conversion table 19 indicates that the data stored in the physical addresses "P4-3" and "P3-2" are not valid data.

The following describes the information stored in the management information table 20 with reference to FIG. 8. FIG. 8 is a schematic diagram explaining an example of the management information table according to the first embodiment. As illustrated in FIG. 8, in the management information table 20, an entry associated with a physical block address stores therein page validity and a time stamp in association with each other.

The page validity is a bit string that indicates whether the data stored in the respective physical pages of the physical block indicated by the associated physical block address is valid data. For example, when one physical block includes n physical pages, the management information table 20 uses a bit string of n bits as the page validity. The management information table 20 associates the physical pages included in the physical block with the respective bits of the page validity, and sets the bit associated with the physical page storing therein valid data as "1". The management information table 20 sets the bit associated with the physical page storing therein no valid data as "0". In the example illustrated in FIG. 8, one physical block includes four physical pages.

The time stamp is a count value counted by the timer 16 at the time when data is stored in the physical block indicated by the associated physical block address. For example, in the example of the management information table 20 illustrated in FIG. 8, the entry associated with the physical block address "P0" stores therein the page validity "1101" and the time stamp "10516" in association with each other. The management information table 20 indicates that data stored in the physical pages having page numbers "0", "1", and "3" is valid data among the physical pages included in the physical block indicated by the physical block address "P0". The management information table 20 indicates that data is written in the physical block indicated by the physical block address "P0" at the time when a count value of the timer 16 is "10516".

Likewise, in the example of the management information table 20 illustrated in FIG. 8, the entry associated with the physical block address "P1" stores therein the page validity "1010" and the time stamp "912" in association with each other. In the management information table 20, the entry associated with the physical block address "P2" stores therein the page validity "0010" and the time stamp "1229" in association with each other.

The address conversion table 19 is an example of a conversion table. The management information table 20 is an example of a time management table and a validity management table.

Referring back to FIG. 6, the requester interface 12 is an interface for a request sent from the CPUs 3a and 3b to the NAND devices 7a to 10a. For example, the requester interface 12 receives a read request including a logical address from the CPUs 3a and 3b through the I/O hub 4. In this case, the requester interface 12 outputs the read request to the request arbitrator 13. When receiving data read from the NAND devices 7a to 10a from the request arbitrator 13, the requester interface 12 transmits the data to the CPUs 3a and 3b that have issued the read request.

The requester interface 12 receives, from the CPUs 3a and 3b, a write request including data to be written in the NAND devices 7a to 10a and the logical address of the data to be written. In this case, the requester interface 12 outputs the received write request to the request arbitrator 13. When receiving a reply from the request arbitrator 13 indicating the completion of the data writing, the requester interface 12 transmits the received reply to the CPUs 3a and 3b that have issued the write request.

The request arbitrator 13 arbitrates various requests issued by the requester interface 12, the data transfer controller 18, and the cyclic reference controller 17. Specifically, the request arbitrator 13 receives a read request or a write request from the requester interface 12. The request arbitrator 13 receives, from the data transfer controller 18, a transfer request that requests to transfer data stored in the NAND devices 7a to 10a from the block currently storing therein the data to another block. The request arbitrator 13 receives, from the data transfer controller 18, an erasing request that requests to erase data in the physical block. The request arbitrator 13 receives, from the cyclic reference controller 17, a table reference request that requests to refer to the address conversion table 19 or the management information table 20.

The request arbitrator 13 arbitrates the read request or the write request received from the requester interface 12, the transfer request or the erasing request received from the data transfer controller 18, and the table reference request received from the cyclic reference controller 17. For example, the request arbitrator 13 performs a read request and a write request issued by the requester interface 12 first, so that the CPUs 3a and 3b will not be hindered from reading and writing data to and from the NAND devices 7a to 10a. For example, the request arbitrator 13 performs a transfer request prior to an erasing request and a table reference request and performs an erasing request prior to a table reference request.

A rule for the request arbitrator 13 to arbitrate the respective requests is not limited to the processing described above. Any rule is applicable. For example, the request arbitrator 13 may calculate a free capacity of the NAND devices 7a to 10a using the information stored in the management information table 20 and perform an erasing request prior to the other requests when the calculated free capacity is smaller than a certain threshold.

The following describes an example of processing performed by the request arbitrator 13 when receiving a read request, a write request, a transfer request, an erasing request, and a table reference request. For example, when receiving the read request, the request arbitrator 13 outputs the logical address included in the read request to the table controller 14. When receiving the physical address from which data is read from the table controller 14, the request arbitrator 13 issues the read request including the received physical address to the device access controller 15. When receiving the data to be read from the device access controller 15 after the issue of the read request, the request arbitrator 13 outputs the received data to the requester interface 12.

When receiving a write request, the request arbitrator 13 outputs the logical address included in the write request to the table controller 14. As a result, when the data to be written is new data, the request arbitrator 13 receives, from the table controller 14, the physical address of the page in which the data is written in a reserve block storing therein no data.

The request arbitrator 13 then issues the write request including the physical address received from the table controller 14 and the data to be written to the device access controller 15. When receiving a reply from the device access controller 15 indicating the completion of the data writing, the request arbitrator 13 outputs, to the table controller 14, a table updating request that includes the physical address of the page serving as the writing destination of the data and the logical address included in the write request. When receiving a reply from the table controller 14 indicating the completion of the table update, the request arbitrator 13 outputs a reply to the write request to the requester interface 12.

When the writing intends to update data, the request arbitrator 13 receives, from the table controller 14, the physical address of the page storing therein the data to be updated as an updating source physical address. The request arbitrator 13 receives, from the table controller 14, the physical address of the page included in the reserve block, that is, the physical address of the page serving as the writing destination of the data, as an updating destination physical address.

When receiving the updating source physical address and the updating destination physical address from the table controller 14, the request arbitrator 13 issues an updating request that requests to update the data to the device access controller 15. Specifically, the request arbitrator 13 issues, to the device access controller 15, the updating request that includes the updating source physical address, the updating destination physical address, and the data to be written.

When receiving a reply from the device access controller 15 indicating the completion of the data writing, the request arbitrator 13 performs the following processing. The request arbitrator 13 outputs, to the table controller 14, the table updating request that includes the updating source physical address, the updating destination physical address, and the logical address included in the write request. When receiving a reply to the table updating request from the table controller 14 after the output of the table updating request, the request arbitrator 13 outputs, to the requester interface 12, a reply indicating the completion of the data writing.

The request arbitrator 13 receives the transfer request that includes the transfer source physical address that is the physical address of the physical page storing therein the data to be transferred and the logical address to designate the data to be transferred. The request arbitrator 13 acquires the physical address of the physical page serving as the transfer destination of the data as the transfer destination physical address by sending an inquiry to the table controller 14, for example.

The request arbitrator 13 issues the transfer request that includes the transfer source physical address and the transfer destination physical address to the device access controller 15. When receiving a reply from the device access controller 15 indicating the completion of the data transfer, the request arbitrator 13 performs the following processing. The request arbitrator 13 outputs, to the table controller 14, the table updating request including the logical address that is received from the data transfer controller 18 and designates the data to be transferred, the transfer destination physical address, and the transfer source physical address. When receiving a reply to the table updating request from the table controller 14, the request arbitrator 13 outputs a reply to the data transfer controller 18 indicating the completion of the data transfer.

The request arbitrator 13 receives the erasing request that includes the physical block address indicating the physical block data of which is erased. When receiving the erasing request, the request arbitrator 13 issues the received erasing request to the device access controller 15. When receiving a reply from the device access controller 15 indicating the completion of the data erasure, the request arbitrator 13 outputs, to the data transfer controller 18, a reply indicating the completion of the data erasure.

When receiving the table reference request, the request arbitrator 13 outputs, to the table controller 14, the reference request for the address conversion table 19 and the management information table 20. When receiving the address conversion table 19 and the management information table 20 from the table controller 14, the request arbitrator 13 outputs the received address conversion table 19 and management information table 20 to the cyclic reference controller 17.

The table controller 14 acquires the physical address associated with the logical address. The table controller 14 updates the address conversion table 19 and the management information table 20. The table controller 14 is an example of an acquisition unit and an updating unit. For example, when receiving the logical address included in the read request from the request arbitrator 13, the table controller 14 refers to the address conversion table 19 and acquires the physical address associated with the received logical address. The table controller 14 then outputs the acquired physical address to the request arbitrator 13.

When receiving the logical address included in the write request from the request arbitrator 13, the table controller 14 refers to the address conversion table 19 and determines whether the validity flag "1" is associated with the received logical address. When the validity flag "0" is associated with the received logical address, that is, the data to be written is new data, the table controller 14 performs the following processing.

The table controller 14 refers to the management information table 20, first, and identifies a physical block storing therein no data, that is, a reserve block. For example, the table controller 14 refers to the management information table 20, searches for the physical block associated with the page validity having all zero bits, and sets the detected physical block as the reserve block. The table controller 14 then outputs the physical address of the physical page included in the reserve block to the request arbitrator 13.

Once the table controller 14 identifies a reserve block, it outputs the physical address of a physical page included in the identified reserve block until data is written in all of the physical pages included in the reserve block. Specifically, the table controller 14 outputs the physical address of the physical page in which no data is written out of the physical pages included in the reserve block in the order of the physical page numbers. When data is written in all of the physical pages included in the reserve block, the table controller 14 refers to the management information table 20 to identify a new reserve block.

When the validity flag "1" is associated with the received logical address, that is, the writing intends to update data, the table controller 14 performs the following processing. The table controller 14 outputs the physical address associated with the received logical address to the request arbitrator 13 as the updating source physical address. The table controller 14 identifies a reserve block and outputs the physical address of the physical page storing therein no data out of the physical pages included in the identified reserve block to the request arbitrator 13 as the updating destination physical address.

When receiving the transfer request from the request arbitrator 13, the table controller 14 receives an inquiry about the transfer destination physical address from the request arbitrator 13. In this case, the table controller 14 identifies a reserve block and outputs the physical address of the physical page storing therein no data out of the physical pages included in the identified reserve block to the request arbitrator 13 as the transfer destination physical address.

The table controller 14 updates the address conversion table 19 and the management information table 20 in accordance with the writing, transfer, and erasing of data. For example, when the request arbitrator 13 writes new data, the table controller 14 receives a table updating request that includes the physical address of the physical page serving as the writing destination of the data and the logical address included in the write request.

In this case, the table controller 14 extracts the physical address of the physical page serving as the writing destination of the data and the logical address from the table updating request. The table controller 14 then refers to the address conversion table 19 and updates the validity flag associated with the extracted logical address to "1". The table controller 14 also stores the extracted physical address in the address conversion table 19 in association with the extracted logical address.

The table controller 14 extracts, from the management information table 20, the entry associated with the physical block address that is the upper bits of the extracted physical address. The table controller 14 updates a bit to "1", the bit corresponding to the physical page number that is the lower bits of the extracted physical address, in the page validity of the extracted entry. The table controller 14 acquires a value of the timer 16 and stores the acquired value in the extracted entry as the time stamp. The table controller 14 then outputs a reply to the table updating request to the request arbitrator 13.

When the request arbitrator 13 updates data, the table controller 14 receives a table updating request that includes the updating source physical address, the updating destination physical address, and the logical address included in the write request. In this case, the table controller 14 extracts the updating source physical address, the updating destination physical address, and the logical address from the table updating request. The table controller 14 then refers to the address conversion table 19 and updates the physical address associated with the extracted logical address to the extracted updating destination physical address.

The table controller 14 extracts, from the management information table 20, the entry associated with the physical block address that is the upper bits of the updating source physical address. The table controller 14 updates a bit to "0", the bit corresponding to the physical page number that is the lower bits of the extracted updating source physical address, in the page validity of the extracted entry.

The table controller 14 then extracts, from the management information table 20, the entry associated with the physical block address that is the upper bits of the updating destination physical address. The table controller 14 updates a bit to "1", the bit corresponding to the physical page number that is the lower bits of the extracted updating destination physical address, in the page validity of the extracted entry. The table controller 14 acquires a value of the timer 16 and stores the acquired value in the extracted entry as the time stamp. The table controller 14 then outputs a reply to the table updating request to the request arbitrator 13.

When the request arbitrator 13 transfers data, the table controller 14 receives a table updating request that includes the transfer source physical address, the transfer destination physical address, and the logical address designating the data to be transferred. In this case, the table controller 14 extracts the transfer source physical address, the transfer destination physical address, and the logical address from the table updating request. The table controller 14 then refers to the address conversion table 19 and updates the physical address associated with the extracted logical address to the extracted transfer destination physical address.

The table controller 14 extracts, from the management information table 20, the entry associated with the physical block address that is the upper bits of the transfer source physical address. The table controller 14 updates a bit to "0", the bit corresponding to the physical page number that is the lower bits of the extracted transfer source physical address, in the page validity of the extracted entry.

The table controller 14 then extracts, from the management information table 20, the entry associated with the physical block address that is the upper bits of the transfer destination physical address. The table controller 14 updates a bit to "1", the bit corresponding to the physical page number that is the lower bits of the extracted transfer destination physical address, in the page validity of the extracted entry. The table controller 14 acquires a value of the timer 16 and stores the acquired value in the extracted entry as the time stamp. The table controller 14 then outputs a reply to the table updating request to the request arbitrator 13.

When receiving a table reference request, the table controller 14 acquires the address conversion table 19 and the management information table 20 from the table storage 11. The table controller 14 then outputs the acquired management information table 20 to the request arbitrator 13. For example, when receiving an instruction to cancel the association between a logical address and data from the system executed by the information processing apparatus 1, the table controller 14 refers to the address conversion table 19 and updates the validity flag associated with the instructed logical address to "0".

The device access controller 15 performs device access on the NAND devices 7a to 10a in accordance with the various requests from the request arbitrator 13. For example, the device access controller 15 receives a read request including a physical address from the request arbitrator 13. In this case, the device access controller 15 reads data stored in the page indicated by the physical address included in the read request out of the pages included in the NAND devices 7a to 10a. The device access controller 15 then outputs the read data to the request arbitrator 13.

For example, the device access controller 15 receives a write request that includes a physical address and data to be written from the request arbitrator 13. In this case, the device access controller 15 stores the data to be written in the physical page indicated by the physical address included in the write request. The device access controller 15 then outputs, to the request arbitrator 13, a reply indicating the completion of the data writing.

For example, the device access controller 15 receives, from the request arbitrator 13, an updating request that includes an updating source physical address, an updating destination physical address, and data to be written. In this case, the device access controller 15 reads data of the physical page indicated by the updating source physical address. Subsequently, the device access controller 15 updates the read data to the data included in the updating request. The device access controller 15 then stores the updated data in the physical page indicated by the updating destination physical address. The device access controller 15 then outputs a reply to the request arbitrator 13 indicating the completion of the data writing.

The device access controller 15 receives a transfer request that includes a transfer source physical address and a transfer destination physical address from the request arbitrator 13. In this case, the device access controller 15 reads data from the physical page indicated by the transfer source physical address and stores the read data in the physical page indicated by the transfer destination physical address. The device access controller 15 then outputs a reply to the request arbitrator 13 indicating the completion of the data transfer.

The device access controller 15 receives an erasing request including the physical block address indicating the physical block data of which is erased from the request arbitrator 13. In this case, the device access controller 15 erases the data stored in the physical block indicated by the physical block address included in the erasing request and outputs a reply to the request arbitrator 13 indicating the completion of the data erasure.

The timer 16 is a counter that counts a value indicating the current time. For example, the timer 16 counts the value at certain time intervals using an operation clock of the information processing apparatus 1 or an operation clock of the NAND controller 6a. The timer 16 is a counter having a certain number of digits. When a digit overflow occurs, the count value is reset to the initial value "0".

The cyclic reference controller 17 starts cyclic reference control for wear leveling when a certain time elapses or the cyclic reference controller 17 receives an instruction from software. The cyclic reference controller 17 performs the cyclic reference control for garbage collection at certain timing. For example, the cyclic reference controller 17 performs the cyclic reference control at certain time intervals, at a certain time, or by an instruction from an application program executed by the information processing apparatus 1. The cyclic reference controller 17 is an example of a selection unit and a determination unit.

The following describes the processing of the cyclic reference control performed by the cyclic reference controller 17. For example, the cyclic reference controller 17 outputs the reference request for the address conversion table 19 and the management information table 20 to the request arbitrator 13. The cyclic reference controller 17 acquires the count value of the timer 16. The cyclic reference controller 17 receives the address conversion table 19 and the management information table 20 from the request arbitrator 13.

The cyclic reference controller 17 selects one logical address serving as the object of transfer determination processing and performs the following transfer determination processing on the selected logical address. The cyclic reference controller 17 refers to the address conversion table 19 and determines whether the value of the validity flag associated with the selected logical address is "1". When the value of the validity flag is "0", the cyclic reference controller 17 newly selects another logical address serving as a new object of the transfer determination processing, for example, the logical address having the next address number, refers to the address conversion table 19, and determines whether the value of the validity flag associated with the newly selected logical address is "1".

When the value of the validity flag is "1", the cyclic reference controller 17 acquires the physical address associated with the selected logical address from the address conversion table 19. The cyclic reference controller 17 refers to the management information table 20 and checks the page validity and the time stamp that are associated with the physical block address that is the upper bits of the acquired physical address.

When performing the cyclic reference control for wear leveling, the cyclic reference controller 17 determines whether a difference between the checked value of the time stamp and the count value of the timer 16 is larger than a certain threshold. The cyclic reference controller 17 determines whether the value of the time stamp is older than the certain threshold. When determining that the checked value of the time stamp is older than the certain threshold, the cyclic reference controller 17 sets the physical page indicated by the acquired physical address to the object of the transfer processing. When determining that the value of the time stamp is newer than the certain threshold, the cyclic reference controller 17 newly selects one logical address serving as the object of the transfer determination processing.

When performing the cyclic reference control for garbage collection, the cyclic reference controller 17 counts the number of bits having a value of "1" among the bits of the checked page validity. The cyclic reference controller 17 counts the number of pieces of valid data stored in the physical block including the physical page indicated by the acquired physical address. When the count number is equal to or smaller than a certain threshold, the cyclic reference controller 17 sets the physical page indicated by the acquired physical address as the object of the transfer processing. When the count number is larger than the certain threshold, the cyclic reference controller 17 newly selects one logical address serving as the object of the transfer determination processing.

When the physical page indicated by the acquired physical address is set to the object of the transfer processing, the cyclic reference controller 17 performs the following processing. The cyclic reference controller 17 determines whether the number of bits having a value of "1" among the bits of the acquired page validity is "1". When determining that the number of bits having a value of "1" among the bits of the acquired page validity is "1", that is, the physical block becomes empty after the transfer of the data, the cyclic reference controller 17 performs the following processing. The cyclic reference controller 17 outputs, to the data transfer controller 18, a set of the acquired physical address, the selected logical address, and a last flag indicating that the block becomes empty. Thereafter, the cyclic reference controller 17 selects another logical address serving as a new object of the transfer determination processing.

When determining that the number of bits having a value of "1" in the bits of the acquired page validity is not "1", the cyclic reference controller 17 outputs a set of the acquired physical address and the selected logical address to the data transfer controller 18. Thereafter, the cyclic reference controller 17 selects another logical address serving as a new object of the transfer determination processing. When the transfer determination processing is performed on all of the logical addresses, the cyclic reference controller 17 ends the processing.

The following describes an example of the processing performed by the cyclic reference controller 17. In the following description, the count value of the timer 16 is "11230" and the transfer control is performed when a value obtained by subtracting the value of the time stamp from the count value is equal to or larger than "10000". For example, the cyclic reference controller 17 selects the logical address "L0-2".

In this case, the cyclic reference controller 17 acquires the physical address "P2-2" from the address conversion table 19 illustrated in FIG. 7. Subsequently, the cyclic reference controller 17 identifies the physical block address "P2" from the physical address "P2-2". The cyclic reference controller 17 then acquires the page validity "0010" and the time stamp "1229" that are associated with the physical block address "P2" from the management information table 20 illustrated in FIG. 8.

When performing the processing for wear leveling, the cyclic reference controller 17 sets the physical page indicated by the physical address "P2-2" as the object of the transfer processing because the value obtained by subtracting the value "1229" of the time stamp from the count value "11230" of the timer 16 is "10001". When performing the cyclic reference control for garbage collection, the cyclic reference controller 17 determines that the number of bits having a value of "1" in the bits of the page validity "0010" is "1". As a result, the cyclic reference controller 17 outputs, to the data transfer controller 18, the set of the selected logical address "L0-2", the physical address "P2-2", and the last flag when performing the processing.

The data transfer controller 18 transfers data. Specifically, the data transfer controller 18 receives, from the cyclic reference controller 17, the set of the logical address and the physical address or the set of the logical address, the physical address, and the last flag. When receiving the set of the logical address and the physical address, the data transfer controller 18 performs the following processing.

The data transfer controller 18 sets the physical address included in the received set as the transfer source physical address, and outputs a transfer request that includes the transfer source physical address and the logical address included in the received set to the request arbitrator 13. When receiving a reply from the request arbitrator 13 indicating the completion of the data transfer, the data transfer controller 18 ends the data transfer processing of the physical page indicated by the physical address included in the received set.

When receiving the set of the logical address, the physical address, and the last flag from the cyclic reference controller 17, the data transfer controller 18 performs the following processing. The data transfer controller 18 sets the physical address included in the received set as the transfer source physical address, and outputs the transfer request that includes the transfer source physical address and the logical address included in the received set to the request arbitrator 13.

When receiving a reply indicating the completion of the data transfer, the data transfer controller 18 outputs, to the request arbitrator 13, an erasing request including the physical block address that is the upper bits of the physical address included in the received set. When receiving a reply from the request arbitrator 13 indicating the completion of the data erasure after the output of the erasing request, the data transfer controller 18 ends the data transfer processing of the physical page indicated by the physical address included in the received set. The data transfer controller 18 is an example of a transfer unit.

For example, the data transfer controller 18 receives the set of the logical address "L0-2", the physical address "P2-2", and the last flag from the cyclic reference controller 17. In this case, the data transfer controller 18 outputs a transfer request that includes the transfer source physical address "P2-2" and the logical address "L0-2" to the request arbitrator 13. When receiving a reply indicating the completion of the data transfer, the data transfer controller 18 outputs the erasing request including the physical block address "P2" to the request arbitrator 13. As a result, the NAND controller 6a erases data of the physical block indicated by the physical block address "P2" and reserves the physical block as a new reserve block.

For example, the requester interface 12, the request arbitrator 13, the table controller 14, the device access controller 15, the timer 16, the cyclic reference controller 17, and the data transfer controller 18 are electronic circuits. Examples of the electronic circuit include an integrated circuit such as an application specific integrated circuit (ASIC) and a field programmable gate array (FPGA), a central processing unit (CPU), and a micro processing unit (MPU).

The table storage 11 is a storage device exemplified as a semiconductor memory element such as a random access memory (RAM) and a flash memory.

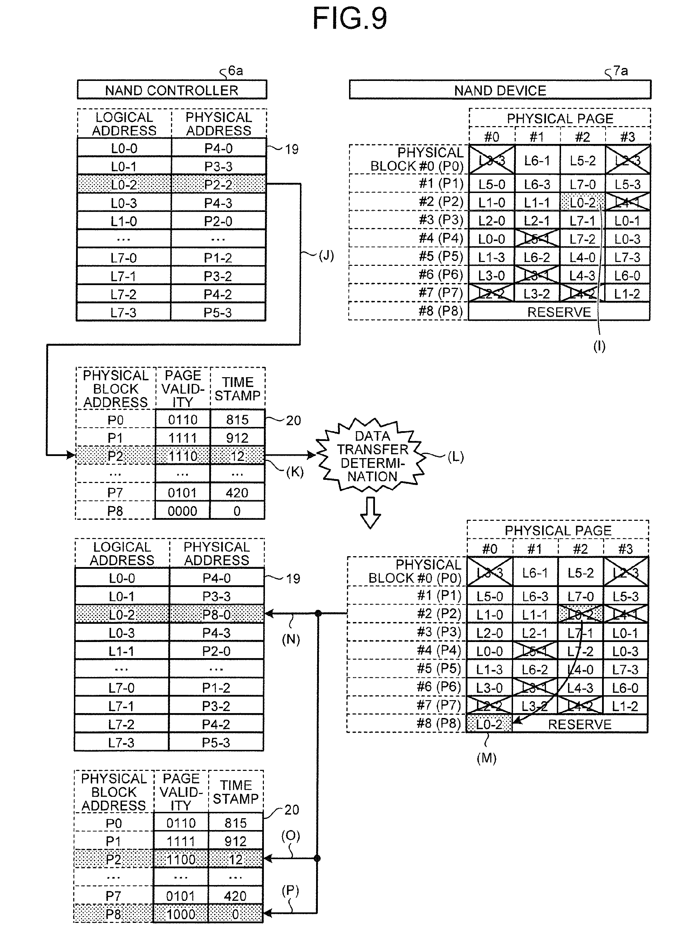

The following describes an example of the processing performed by the NAND controller 6a with reference to FIG. 9. FIG. 9 is a schematic diagram explaining an example of the processing performed by the NAND controller according to the first embodiment. In the example illustrated in FIG. 9, the validity flag of the address conversion table 19 is omitted for easy understanding. In the physical pages of the NAND device 7a illustrated in FIG. 9, those marked with a cross are the physical pages storing therein data that is not valid.

For example, the NAND controller 6a selects the logical address "L0-2". The NAND controller 6a acquires the physical address "P2-2" associated with the logical address "L0-2" from the address conversion table 19. In this case, the NAND controller 6a determines whether the data stored in the physical page illustrated with (I) in FIG. 9 is transferred. Specifically, the NAND controller 6a refers to the management information table 20 as illustrated with (J) in FIG. 9 and extracts the entry associated with the physical block address "P2" of the physical address "P2-2" as illustrated with (K) in FIG. 9. The NAND controller 6a then determines whether the data is transferred in accordance with the page validity "1110" stored in the extracted entry as illustrated with (L) in FIG. 9, when performing the processing relating to garbage collection.

When determining that the data is transferred, the NAND controller 6a performs the following processing. For example, as illustrated with (M) in FIG. 9, the NAND controller 6a stores the data stored in the physical page indicated by the physical address "P2-2" in the physical page "P8-0" included in the reserve block. The NAND controller 6a can update the address conversion table 19 without inverse-converting the physical address "P2-2" into the logical address "L0-2" because the NAND controller 6a has already identified the physical address "L0-2" indicating the data to be transferred. The NAND controller 6a only has to update the physical address associated with the selected logical address "L0-2" to "P8-0" as illustrated with (N) in FIG. 9.

As illustrated with (O) in FIG. 9, the NAND controller 6a refers to the management information table 20 and updates the page validity associated with the physical block address "P2" to "1100". The NAND controller 6a updates a bit to "0" in the page validity, the bit corresponding to the physical address "P2-2" indicating the physical page serving as the transfer source. As illustrated with (P) in FIG. 9, the NAND controller 6a refers to the management information table 20 and updates the page validity associated with the physical block address "P8" to "1000". The NAND controller 6a updates a bit to "1" in the page validity, the bit corresponding to the physical address "P8-0" indicating the physical page serving as the transfer destination.

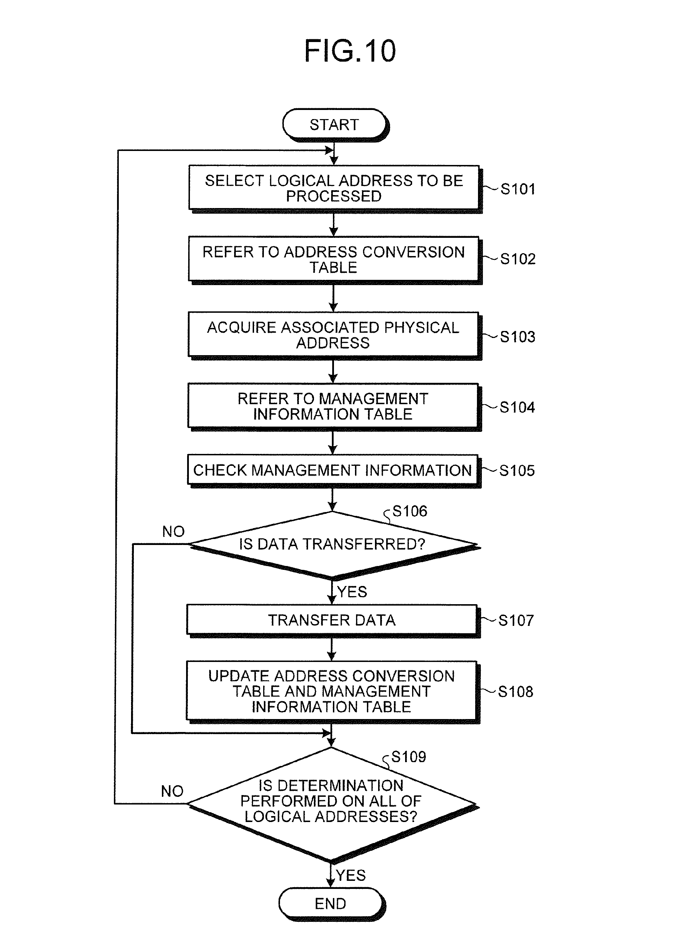

The following describes a flow of the processing performed by the NAND controller 6a with reference to FIG. 10. FIG. 10 is a flowchart explaining an overview of the processing performed by the NAND controller according to the first embodiment. For example, the NAND controller 6a performs the data transfer processing for garbage collection illustrated in FIG. 10 when a certain time elapses or the NAND controller 6a receives an instruction from software. Specifically, the NAND controller 6a selects a logical address serving as the object of the transfer determination processing for garbage collection (step S101).

The NAND controller 6a refers to the address conversion table 19 (step S102) and acquires the physical address associated with the selected logical address (step S103). The NAND controller 6a refers to the management information table 20 (step S104) and checks management information associated with the acquired physical address (step S105). Specifically, the NAND controller 6a checks the page validity associated with the physical block address that is the upper bits of the acquired physical address (step S105).

The NAND controller 6a determines whether the data is transferred using the checked management information (step S106). If it determines that the data is transferred (Yes at step S106), the NAND controller 6a transfers the data (step S107). Specifically, the NAND controller 6a transfers the data stored in the physical page indicated by the physical address acquired at step S103 to a physical page of the reserve block.

The NAND controller 6a updates the address conversion table 19 and the management information table 20 in accordance with the transfer of the data (step S108). The NAND controller 6a determines whether the transfer determination processing is performed on all of the logical addresses (step S109). If the transfer determination processing is performed on all of the logical addresses (Yes at step S109), the NAND controller 6a ends the processing.

If the transfer determination processing is not performed on all of the logical addresses (No at step S109), the NAND controller 6a performs the processing at step S101. If it determines that the data is not transferred (No at step S106), the NAND controller 6a skips the processing at step S107 and step S108.

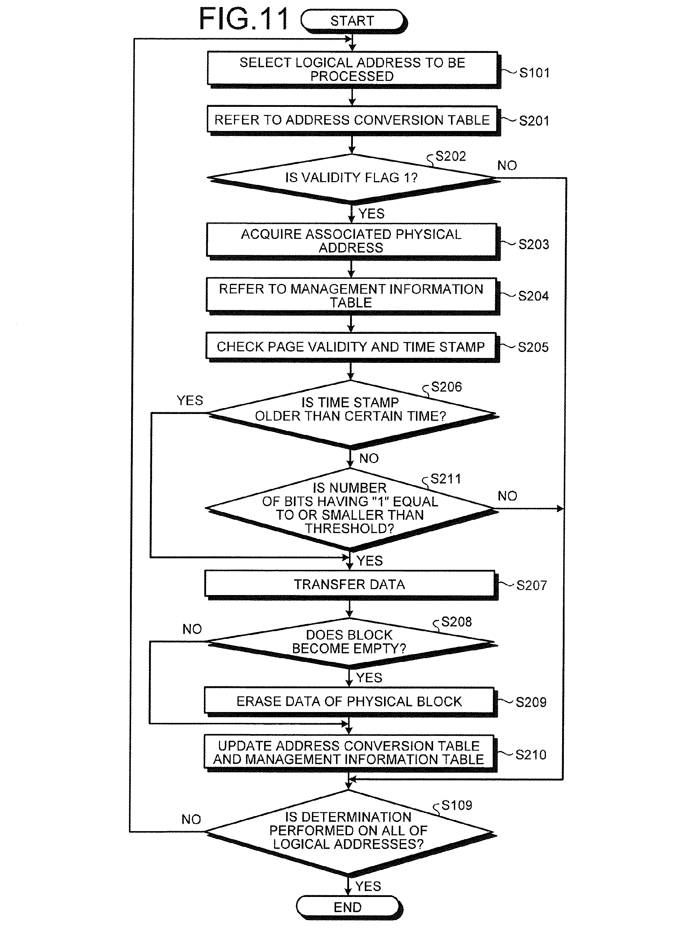

The following describes the processing performed by the NAND controller 6a to determine whether data is transferred for garbage collection and wear leveling, that is, the details of the cyclic reference control performed by the NAND controller 6a, with reference to FIG. 11. FIG. 11 is a flowchart explaining a flow of the cyclic reference control performed by the NAND controller according to the first embodiment. The flowchart illustrated in FIG. 11 illustrates the processing illustrated in FIG. 10 in detail. In the processing illustrated in FIG. 11, the same processing as that illustrated in FIG. 10 is labeled with the same step numbers as those illustrated in FIG. 10, and the description thereof is omitted.

For example, the NAND controller 6a refers to the address conversion table 19 (step S201) and determines whether the validity flag associated with the selected logical address is "1" (step S202). If the validity flag is "1" (Yes at step S202), the NAND controller 6a acquires the physical address associated with the logical address from the address conversion table 19 (step S203). The NAND controller 6a refers to the management information table 20 (step S204) and checks the page validity and the time stamp that are associated with the physical block address that is the upper bits of the acquired physical address (step S205).

The NAND controller 6a determines whether the checked time stamp is an older value than a certain time (step S206), and if the checked time stamp is an older value than the certain time (Yes at step S206), the NAND controller 6a transfers the data (step S207). The NAND controller 6a determines whether the physical block becomes empty as a result of the transfer of the data (step S208). If it determines that the physical block becomes empty (Yes at step S208), the NAND controller 6a erases the data of the empty physical block (step S209).

If it determines that the physical block is not empty (No at step S208), the NAND controller 6a skips step S209. The NAND controller 6a updates the address conversion table 19 and the management information table 20 in accordance with the data transfer and the data erasure of the physical block (step S210). The NAND controller 6a then performs the processing at step S109.

If the checked time stamp is a newer value than the certain time (No at step S206), the NAND controller 6a determines whether the number of bits having a value of "1" in the bits included in the page validity is equal to or smaller than a threshold (step S211). If it determines that the number of bits having a value of "1" in the bits included in the page validity is equal to or smaller than the threshold (Yes at step S211), the NAND controller 6a performs the processing at step S207.

If it determines that the number of bits having a value of "1" in the bits included in the page validity is larger than the threshold (No at step S211), the NAND controller 6a performs the processing at step S109. If the validity flag associated with the selected logical address is "0" (No at step S202), the NAND controller 6a performs the processing at step S109.

### Effects of NAND controller 6a

As described above, the SSD 5a includes the NAND devices 7a to 10a each including a plurality of physical pages and the NAND controller 6a that controls the NAND devices 7a to 10a. The NAND controller 6a selects a logical address and acquires the physical address associated with the selected logical address from the address conversion table 19 in which the logical address and the physical address are associated with each other.

The NAND controller 6a determines whether data stored in the physical page indicated by the acquired physical address is transferred. When determining that the data stored in the physical page indicated by the acquired physical address is transferred, the NAND controller 6a transfers the data of the physical page indicated by the acquired physical address to the physical page of a reserve block. The NAND controller 6a updates the physical address associated with the selected logical address among the physical addresses stored in the address conversion table 19 to the physical address of the physical page serving as the transfer destination of the data.

The NAND controller 6a determines whether data is transferred on a logical address basis, not on a physical block basis. The NAND controller 6a thus can update the address conversion table 19 without having a unit that inverse-converts the physical address indicating the physical page serving as the transfer source into the logical address of the data to be transferred. As a result, the NAND controller 6a can have a reduced circuit scale.

The NAND controller 6a can complete the transfer of data without inverse-converting the physical address into the logical address. The NAND controller 6a thus can complete the transfer of data with high speed even if an increase in storage capacity of the NAND devices 7a to 10a causes the address conversion table 19 to increase in scale.

The NAND controller 6a selects all of the logical addresses in the order of numbers from the address conversion table 19. The NAND controller 6a determines for all data whether the data is transferred when the transfer control of data is performed on a logical address basis, thereby making it possible to reserve a reserve block and reliably level the deterioration.

The NAND controller 6a refers to the time stamp of the physical block including the physical address acquired from the address conversion table 19 in the management information table 20 storing therein the time stamp for each physical block. When the difference between the value of the referred time stamp and the count value of the timer 16 is larger than a certain threshold, the NAND controller 6a transfers the data stored in the physical page indicated by the physical address acquired from the address conversion table 19. The NAND controller 6a can level the deterioration of elements because data is transferred after a certain time has elapsed from when the data is stored.

The NAND controller 6a refers to the page validity of the physical block including the physical address acquired from the address conversion table 19 in the management information table 20 storing therein the page validity for each physical block. When the number of bits having a value of "1" in the bits included in the referred page validity is larger than a certain threshold, the NAND controller 6a transfers the data stored in the physical page indicated by the physical address acquired from the address conversion table 19. The NAND controller 6a thus can transfer data from the physical block having little valid data to the reserve block and reserve the physical block serving as the transfer source as a new reserve block. As a result, the NAND controller 6a can efficiently use the storage capacity of the NAND devices 7a to 10a.

### [b] Second Embodiment

When starting the cyclic reference control for garbage collection, the NAND controller 6a in the first embodiment sequentially selects all of the logical addresses in the address conversion table 19 and determines whether the data indicated by the selected logical address is transferred. The embodiment, however, is not limited to this manner. For example, a NAND controller 6c according to a second embodiment may select only some logical addresses out of all the logical addresses in the address conversion table 19 when performing the cyclic reference control for garbage collection one time.

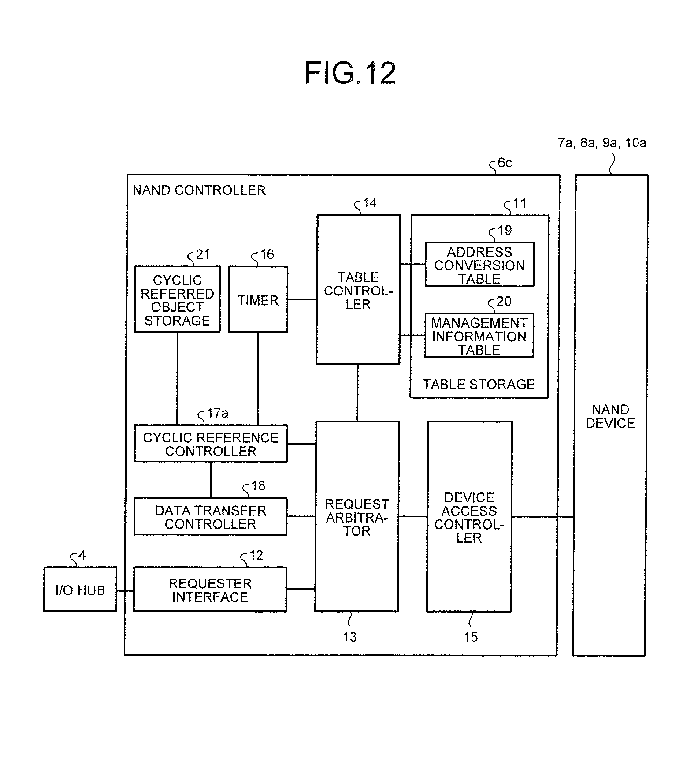

The following describes processing performed by the NAND controller 6c. The functional structure of the NAND controller 6c is described with reference to FIG. 12. FIG. 12 is a schematic diagram explaining the functional structure of the NAND controller according to the second embodiment. In the functional structure of the NAND controller 6c illustrated in FIG. 12, the same functional structure as that of the NAND controller 6a illustrated in FIG. 6 is labeled with the same numerals as those of the NAND controller 6a, and the description thereof is omitted.

In the example illustrated in FIG. 12, the NAND controller 6c includes a cyclic reference controller 17a and a cyclic referred object storage 21. The cyclic referred object storage 21 is a memory that stores therein an object on which the cyclic reference controller 17a performs the determination processing. The cyclic reference controller 17a, which has the same function as the cyclic reference controller 17 illustrated in FIG. 6, performs the cyclic reference control for garbage collection at certain time intervals.

The cyclic reference controller 17a selects the logical addresses stored in the address conversion table 19 in ascending numerical order. For example, the cyclic reference controller 17a selects the logical address "L0-0" and sets the selected address "L0-0" as the object of the transfer determination processing. The cyclic reference controller 17a then selects the logical address "L0-1" and sets the selected logical address "L0-1" as the object of the transfer determination processing. The cyclic reference controller 17a continues to select the logical addresses in ascending numerical order and sets the selected logical address as the object of the transfer determination processing.

When a certain time elapses from the start of the cyclic reference control for garbage collection, the cyclic reference controller 17a stores the last logical address set as the object of the transfer determination processing, that is, the last selected logical address, in the cyclic referred object storage 21. When restarting the cyclic reference control after the storing, the cyclic reference controller 17a acquires the logical address stored in the cyclic referred object storage 21, and selects the logical address having the next address number to that of the acquired logical address. The cyclic reference controller 17a sets the selected logical address as the object of the transfer determination processing.

For example, the cyclic reference controller 17a performs the following processing when a certain time elapses from the start of the cyclic reference control in which the logical address "L3-2" is set as the object of the transfer determination processing. The cyclic reference controller 17a performs the transfer determination on the data indicated by the logical address "L3-2" and stores the logical address "L3-2" in the cyclic referred object storage 21 after the completion of the transfer determination processing. In this case, when restarting the cyclic reference control, the cyclic reference controller 17a acquires the logical address "L3-2" from the cyclic referred object storage 21. The cyclic reference controller 17a thus selects the logical address "L3-3" having the next address number to that of the logical address "L3-2" and sets the selected logical address "L3-3" as the object of the transfer determination processing.

The cyclic reference controller 17a may limit the determination objects not by a certain time interval but by another manner. For example, the cyclic reference controller 17a divides the logical addresses into groups of a certain number of logical addresses. The cyclic reference controller 17a may perform the transfer determination processing on the logical addresses included in one group by one execution of the cyclic reference control.

For example, the cyclic reference controller 17a sets the logical addresses "L0-0" to "L3-3" as a group "No. 1" and the physical block addresses "L4-0" to "L7-3" as a group "No. 2". The cyclic reference controller 17a sets the consecutive 16 logical addresses as one group. The cyclic reference controller 17a performs the transfer determination processing on the logical addresses included in the group "No. 1".

When performing the transfer determination processing on the logical addresses included in the group "No. 1", the cyclic reference controller 17a stores "No. 1" in the cyclic referred object storage 21 as information indicating the group on which the transfer determination processing has been performed. When restarting the cyclic reference control, the cyclic reference controller 17a acquires, from the cyclic referred object storage 21, the information "No. 1" indicating the group on which the transfer determination processing has been performed. In this case, the cyclic reference controller 17a performs the transfer determination processing on the logical addresses included in the group "No. 2" that is the next group to the group "No. 1".

The cyclic reference controller 17a can use any information as the information indicating the group. For example, when a group is made on the basis of the upper bits in each of logical addresses, for example, logical block address, the cyclic reference controller 17a may store, in the cyclic referred object storage 21, the logical block address of each logical address on which the transfer determination processing has been performed.

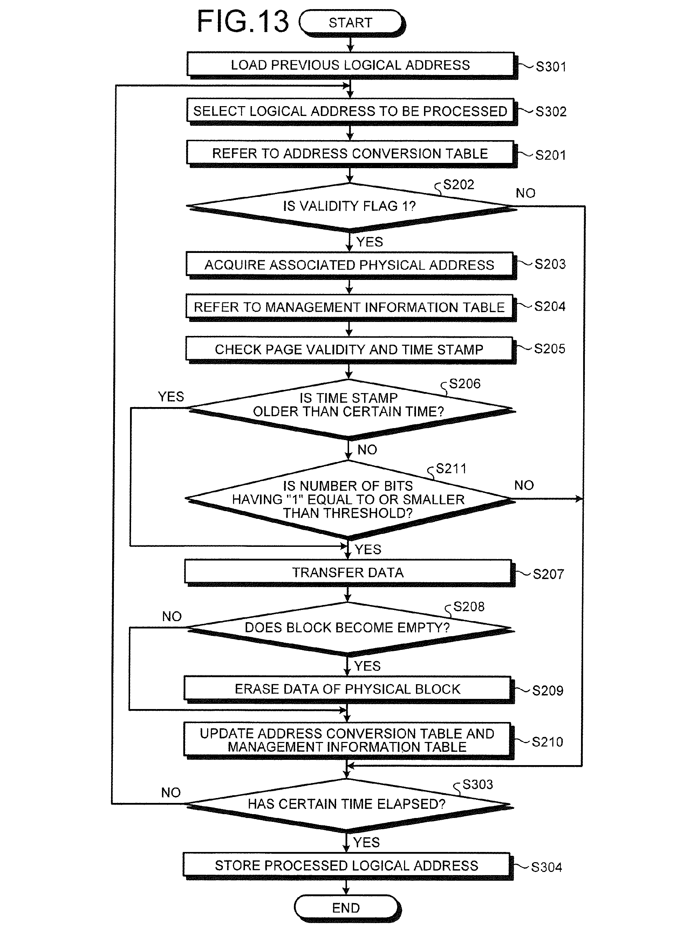

The following describes a flow of the processing performed by the NAND controller 6c with reference to FIG. 13. FIG. 13 is a first flowchart explaining a flow of the processing performed by the NAND controller according to the second embodiment. In the example illustrated in FIG. 13, the NAND controller 6c limits the objects of the transfer determination processing by a certain time interval. In the processing illustrated in FIG. 13, the same processing as that illustrated in FIG. 11 is labeled with the same step numbers as those illustrated in FIG. 11, and the description thereof is omitted.

For example, when performing the cyclic reference control, the NAND controller 6c reads, from the cyclic referred object storage 21, the last logical address on which the transfer determination processing has been performed (step S301). The NAND controller 6c selects the logical address having the next address number to that of the read logical address and sets the selected logical address as the object of the transfer determination processing (step S302). The NAND controller 6c performs the processing from step S201 to step S211.

When performing the processing from step S201 to step S211, the NAND controller 6c determines whether a certain time has elapsed from the start of the cyclic reference control (step S303). If it determines that the certain time has elapsed from the start of the cyclic reference control (Yes at step S303), the NAND controller 6c stores, in the cyclic referred object storage 21, the logical address on which the transfer determination processing has been performed (step S304), and ends the processing. If it determines that the certain time has not elapsed from the start of the cyclic reference control (No at step S303), the NAND controller 6c performs the processing at step S302.

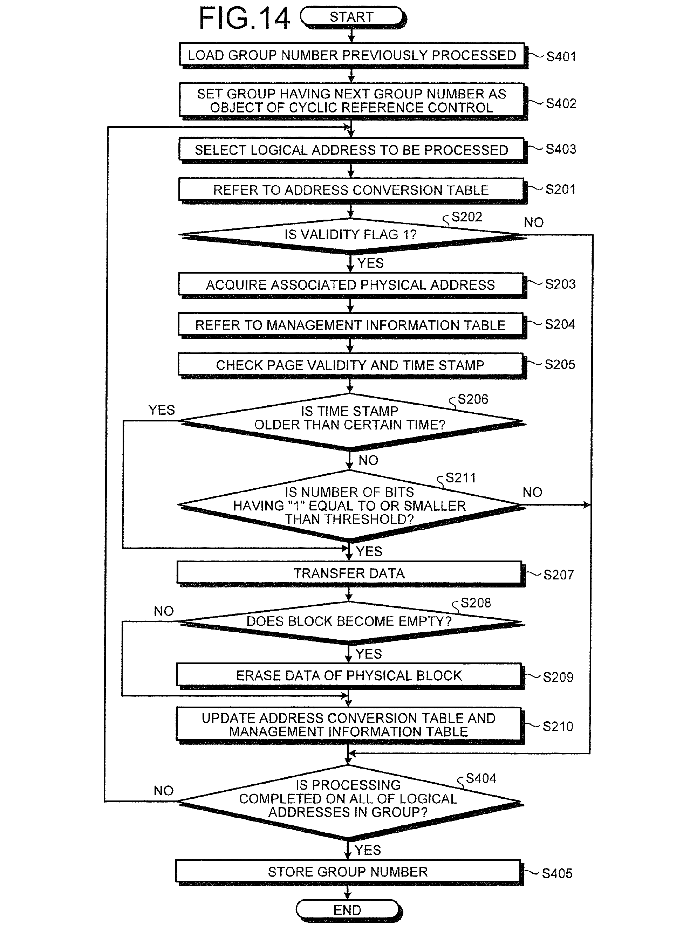

The following describes another example of the processing performed by the NAND controller 6c with reference to FIG. 14. FIG. 14 is a second flowchart explaining a flow of the processing performed by the NAND controller according to the second embodiment. In the example illustrated in FIG. 14, the NAND controller 6c makes groups of a certain number of logical addresses and sets the logical addresses included in one group as the object of one execution of the cyclic reference control for garbage collection. In the processing illustrated in FIG. 14, the same processing as that illustrated in FIG. 11 is labeled with the same step numbers as those illustrated in FIG. 11, and the description thereof is omitted.

When performing the cyclic reference control, the NAND controller 6c reads, from the cyclic referred object storage 21, the group number of the last group on which the transfer determination processing has been performed (step S401). The NAND controller 6c sets the group indicated by the next group number to that of the read group number as the object of the cyclic reference control (step S402). The NAND controller 6c selects a logical address serving as the object of the transfer determination processing from the logical addresses included in the group serving as the object of the cyclic reference control (step S403) and performs the processing from step S201 to step S211.

When performing the processing from step S201 to step S211, the NAND controller 6c determines whether the transfer determination processing is completed on all of the logical addresses included in the group serving as the object of the cyclic reference control (step S404). If it determines that the transfer determination processing is completed on all of the logical addresses included in the group serving as the object of the cyclic reference control (Yes at step S404), the NAND controller 6c performs the following processing. The NAND controller 6c stores the group number of the group serving as the object of the cyclic reference control in the cyclic referred object storage 21 (step S405), and ends the processing. If it determines that the transfer determination processing is not completed on all of the logical addresses included in the group serving as the object of the cyclic reference control (No at step S404), the NAND controller 6c performs the processing at step S403.

### Effects of NAND controller 6c

As described above, when a certain time has elapsed from the start of the cyclic reference control, the NAND controller 6c stores the last logical address set as the object of the transfer determination processing. When restarting the cyclic reference control after the storing, the NAND controller 6c restarts the cyclic reference control in the order of numbers from the logical address having the next address number to that of the stored logical address.

The NAND controller 6c thus can reduce the processing time for one execution of the cyclic reference control. As a result, the NAND controller 6c can provide flexible scheduling such as the cyclic reference control performed in nighttime in which the information processing apparatus 1 performs no processing. By the cyclic reference control, the NAND controller 6c reduces the time during which the NAND devices 7a to 10a are not accessible, thereby making it possible to improve access performance to the NAND devices 7a to 10a.

The NAND controller 6c divides the logical addresses into multiple groups and performs the cyclic reference control for each group. The NAND controller 6c thus can reduce the processing time for one execution of the cyclic reference control and provide flexible scheduling. The NAND controller 6c can also improve access performance to the NAND devices 7a to 10a.

### [c] Third embodiment

When performing the transfer determination processing, the NAND controllers 6a to 6c determine whether data is transferred using the page validity and the time stamp stored in the management information table 20. The embodiments, however, are not limited to this manner.

For example, it is preferable for the NAND controllers 6a to 6c to transfer only data of the physical block including a physical page having invalid data from the viewpoint of effectively using the storage capacity of the NAND controllers 6a to 6c. The NAND controllers 6a to 6c, however, may fail to properly determine whether data is transferred in the garbage collection when the number of bits having a value of "1" among the bits of the checked page validity is small.

Specifically, the NAND controllers 6a to 6c are not able to distinguish between no data and invalid data in a physical page included in the physical block associated with the checked page validity. The NAND controllers 6a to 6c thus transfer data not to be transferred, that is, data stored in the physical block including a physical page in which no data is written, in some cases.

A NAND controller 6d according to a third embodiment stores therein status information indicating whether data is written in all of the physical pages for each physical block. The NAND controller 6d acquires the physical address associated with a logical address selected as the object of the transfer determination processing from the address conversion table 19, and refers to the status information associated with the physical block indicated by the acquired physical address. The NAND controller 6d transfers the data indicated by the selected logical address when the referred status information indicates that data is written in all of the physical pages.

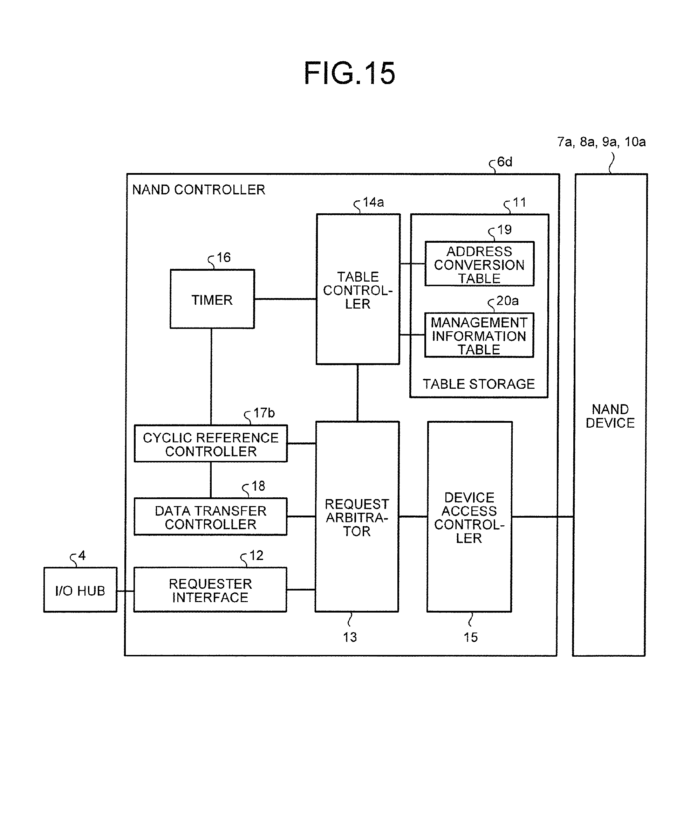

The following describes the NAND controller 6d according to the third embodiment. A functional structure of the NAND controller 6d is described with reference to FIG. 15. FIG. 15 is a schematic diagram explaining the functional structure of the NAND controller according to the third embodiment. In the functional structure of the NAND controller 6d illustrated in FIG. 15, the same functional structure as that of the NAND controller 6a illustrated in FIG. 6 is labeled with the same numerals as those of the NAND controller 6a, and the description thereof is omitted.

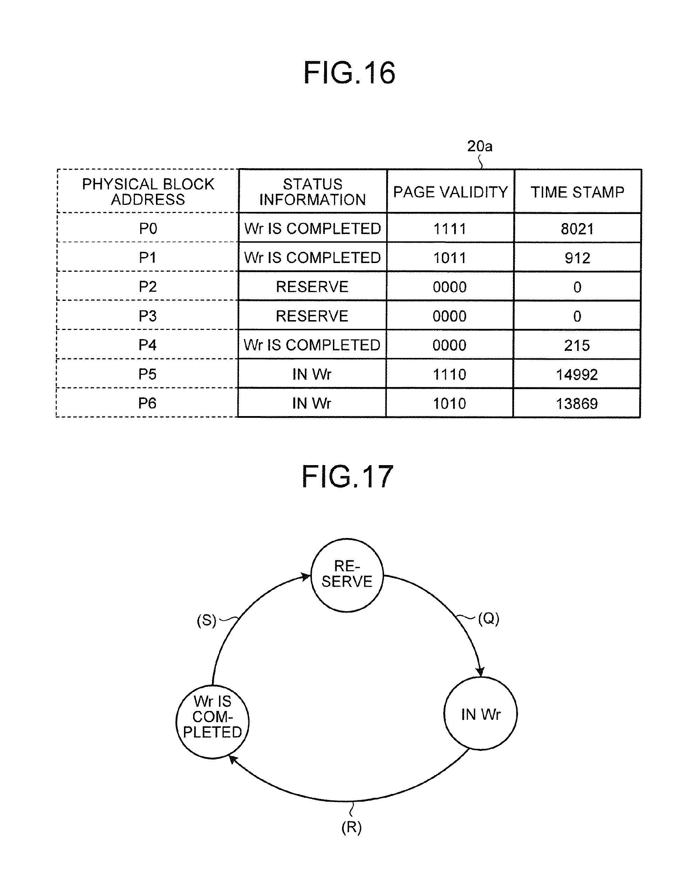

For example, the NAND controller 6d includes a table controller 14a and a cyclic reference controller 17b. The table storage 11 includes a management information table 20a. An example of the management information table 20a is described with reference to FIG. 16. FIG. 16 is a schematic diagram explaining an example of the management information table according to the third embodiment.

In the same manner as the management information table 20 illustrated in FIG. 8, the management information table 20a stores therein the page validity and the time stamp in association with each other for each physical block address. The management information table 20a stores therein the status information for each physical block address.

For example, the status information "Wr is completed" indicates that data is written in all of the physical pages of the physical block indicated by the associated physical block address. For example, the status information "reserve" indicates that data is erased from and no data is written in all of the physical pages of the physical block indicated by the associated physical block address. The status information "reserve" indicates that the physical block indicated by the associated physical block address is a reserve block.

The status information "in Wr" indicates that data is written in some physical pages and no data is written in the other physical pages in the physical block indicated by the associated physical block address. The status information "in Wr" indicates that a reserve pages in which data can be written are present in the physical block indicated by the associated physical block address.

The table controller 14a performs the same processing as that of the table controller 14 illustrated in FIG. 6. When updating the management information table 20a, the table controller 14a performs the update in the same manner as the table controller 14, and updates the status information stored in the management information table 20a in accordance with a status transition diagram illustrated in FIG. 17.

FIG. 17 is a schematic diagram explaining processing performed by the NAND controller according to the third embodiment and the status transition of the physical block. For example, when data is written, the table controller 14a acquires the physical address at which the data is written. When data is updated, the table controller 14a acquires the updating destination physical address at which the updated data is written. When data is transferred, the table controller 14a acquires the transfer destination physical address to which the data is transferred.

The table controller 14a extracts the physical block address from the acquired physical address, updating destination physical address, or transfer destination physical address and refers to the status information associated with the extracted physical block address. When the referred status information is "reserve", the table controller 14a updates the referred status information to "in Wr" as illustrated with (Q) in FIG. 17.

When the referred status information is "in Wr", the table controller 14a extracts the physical page number that is the lower bits of the physical address acquired by referring to the address conversion table, the updating destination physical address, or the transfer destination physical address, and does not update the status information when the extracted physical page number indicates a page other than the last page in the physical block. When the extracted physical page number indicates the last page in the physical block, the table controller 14a updates the status information "in Wr" to "Wr is completed" as illustrated with (R) in FIG. 17.

When data is erased, the table controller 14a acquires the physical block address of the physical block data of which is erased. In this case, the table controller 14a updates the status information associated with the acquired physical block address to "reserve" as illustrated with (S) in FIG. 17.

Referring back to FIG. 15, the cyclic reference controller 17b functions in the same manner as the cyclic reference controller 17 illustrated in FIG. 6. When performing the cyclic reference control for garbage collection, the cyclic reference controller 17b acquires the physical address from the address conversion table 19, and extracts the physical block address from the acquired physical address. The cyclic reference controller 17b refers to the status information associated with the extracted physical block address in the management information table 20a. When the referred status information is "Wr is completed", the cyclic reference controller 17b determines whether data is transferred using the value of the time stamp and the page validity in the same manner as the cyclic reference controller 17.

As a result, in the garbage collection, the NAND controller 6d transfers data from the physical block including invalid data without transferring data stored in the physical block including a reserve pages. The NAND controller 6d thus can perform appropriate garbage collection, thereby making it possible to efficiently use the storage areas of the NAND devices 7a to 10a.

The table controller 14a may refer to the status information and the page validity that are stored in the management information table 20a at any timing and output, to the request arbitrator 13, an erasing request including the physical block address that is associated with the status information "Wr is completed" and the page validity has all zero bits. When managing the status information, the NAND controller 6d can manage the number of physical pages storing therein valid data as a page count, for example, without managing the page validity, and perform the cyclic reference control using the page count.

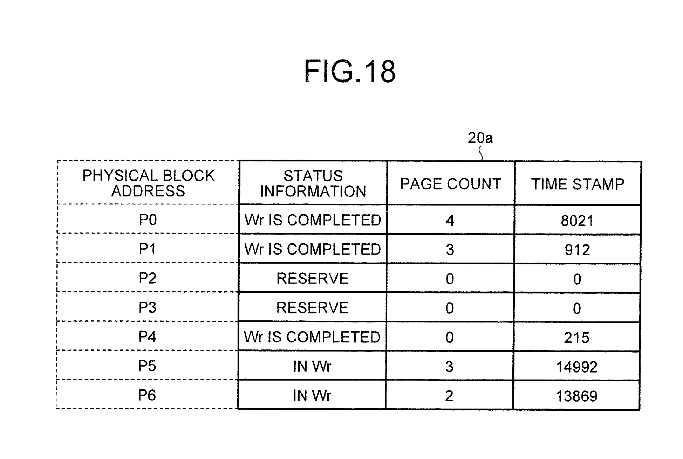

FIG. 18 is a schematic diagram explaining a variation of the management information table according to the third embodiment. In the example illustrated in FIG. 18, the management information table 20a stores therein the page count instated of the page validity. The page count indicates the number of pieces of valid data stored in the physical block indicated by the associated physical block address. The management information table 20a is an example of a status management table, a time management table, and a validity management table.

When the page count is stored in the management information table 20a, the table controller 14a performs the following processing. For example, the table controller 14a increments by one the page count associated with the physical block address of the physical block including the physical page in which data is written or to which data is transferred every time the data is written. The table controller 14a decrements by one the page count associated with the physical block address of the physical block including the physical page from which data is transferred every time the data is transferred.

When the physical page number of the writing destination physical page indicates the last page in the physical block, the table controller 14a updates the status information to "Wr is completed". When data is erased, the table controller 14a updates the status information associated with the physical block address of the physical block data of which is erased to "reserve".

When performing the processing for garbage collection, the cyclic reference controller 17b refers to the status information and the page count, and determines whether the value of the referred page count is smaller than a certain threshold in the case that the referred status information is "Wr is completed". When determining that the referred page count is smaller than the certain threshold, the cyclic reference controller 17b transfers the data.

In this way, when managing valid data using the page count, the NAND controller 6d can reduce the size of the management information table 20a. For example, when one physical block includes 128 physical pages, the size of the page validity is 128 bits per physical block, while the size of the page count is only 9 bits. The NAND controller 6d thus can reduce the size of the management information table 20a.

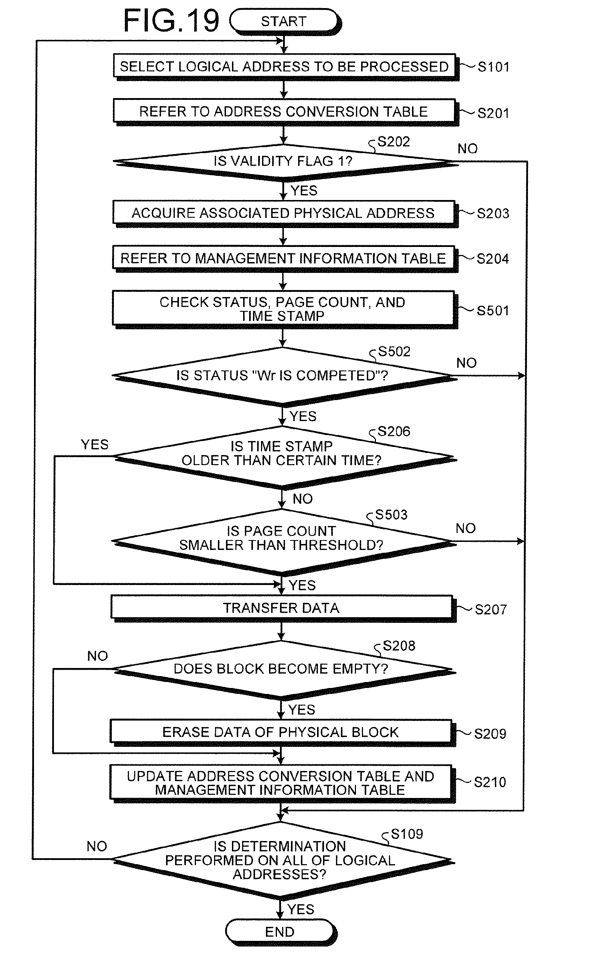

The following describes a flow of the processing performed by the NAND controller 6d with reference to FIG. 19. FIG. 19 is a flowchart explaining a flow of the processing performed by the NAND controller according to the third embodiment. In the example illustrated in FIG. 19, the processing flow of the cyclic reference control performed by the NAND controller 6d using the page count. In the processing illustrated in FIG. 19, the same processing as that illustrated in FIG. 11 is labeled with the same step numbers as those illustrated in FIG. 11, and the description thereof is omitted.

For example, the NAND controller 6d refers to the management information table (step S204) and checks the status information, the page count, and the time stamp that are associated with the physical block address including the acquired physical page (step S501). The NAND controller 6d determines whether the checked status information is "Wr is completed" (step S502).

If the status information is "Wr is completed" (Yes at S502), the NAND controller 6d determines whether the checked time stamp is an older value than a certain time (step S206). If it determines that the checked time stamp is newer than the certain time (No at step S206), the NAND controller 6d determines whether the value of the page count is smaller than a certain threshold (step S503). If the value of the page count is smaller than the certain threshold (Yes at step S503), the NAND controller 6d transfers the data (step S207).

If the checked status information is not "Wr is completed" (No at step S502), the NAND controller 6d performs the processing at step S109. If the value of the page count is larger than the certain threshold (No at step S503), the NAND controller 6d performs the processing at step S109.

### Effects of NAND controller 6d

As described above, the NAND controller 6d includes the management information table 20a that stores therein the status information indicating that data is written in all of the physical pages included in the physical block for each physical block. The NAND controller 6d checks the status information associated with the physical block address of the physical address associated with a selected logical address. The NAND controller 6d performs the transfer determination processing of the data indicated by the selected logical address when the checked status information indicates that data is written in all of the physical pages included in the physical block. The NAND controller 6d thus can perform appropriate garbage collection, thereby making it possible to efficiently use the storage areas of the NAND devices 7a to 10a.

The NAND controller 6d includes the management information table 20a that stores therein the page count indicating the number of pieces of valid data for each physical block. The NAND controller 6d checks the status information and the page count that are associated with the physical block address of the physical address associated with the selected logical address. The NAND controller 6d transfers the data indicated by the selected logical address when the checked status information indicates that data is written in all of the physical pages included in the physical block and the value of the checked page count is smaller than a certain threshold. The NAND controller 6d thus can reduce the capacity of the management information table 20a.

### [d] Fourth embodiment

The embodiments of the invention are described above. The invention, however, may be implemented in various forms other than the embodiments described above. The following describes other embodiments of the invention as a fourth embodiment.

### 1. Granularity of data transfer

The NAND controllers 6a to 6d determine whether data is transferred, for each logical address included in the NAND devices 7a to 10a. The embodiments, however, are not limited to this manner. The NAND controllers 6a to 6d can determine whether data is transferred on any unit basis as long as they determine whether data is transferred using a logical address as the source. For example, the NAND controllers 6a to 6d may perform the cyclic reference control and the transfer control by collectively using data indicated by a plurality of logical addresses.

### 2. Reading of address conversion table and management information table

The cyclic reference controller 17 reads all of the entries of the address conversion table 19 and the management information table 20. The embodiments, however, are not limited to this manner. For example, the cyclic reference controller 17 produces one logical address and acquires the physical address associated with the produced logical address through the request arbitrator 13 and the table controller 14. The cyclic reference controller 17 extracts the physical block address from the acquired physical address and acquires the time stamp and the page validity that are associated with the extracted physical block address through the request arbitrator 13 and the table controller 14. The cyclic reference controller 17 then determines whether data is transferred using the acquired time stamp and page validity.

In this way, the cyclic reference controller 17 may refer to the information stored in the address conversion table 19 and the management information table 20 entry by entry. The cyclic reference controller 17 may directly access the address conversion table 19 and the management information table 20 that are stored in the table storage 11 without using the request arbitrator 13 and the table controller 14.

### 3. Functional structure of NAND controllers 6a to 6d

The functional structures of the NAND controllers 6a to 6d are exemplarily described above. Any structure is adoptable that enables the same processing as that of the respective NAND controllers 6a to 6d. For example, the NAND controller 6a may include a transfer controller that has the same functions as those of the cyclic reference controller 17 and the data transfer controller 18.

In the embodiments, the NAND controllers 6a to 6d determine the transfer of data stored in the NAND devices 7a to 10a. The embodiments, however, are not limited to this manner. The NAND controllers 6a to 6d may operate as memory controllers of storage media to which any technique is applied, such as a memory, as long as they transfer data.

### 4. Arbitration of requests

The NAND controllers 6a to 6d perform preferentially a read request and a write request that are received from the requester interface 12. The embodiments, however, are not limited to this manner. The NAND controllers 6a to 6d may arbitrate requests so as to equalize the life of the cells of the NAND devices 7a to 10a.

### 5. Reserve block

The table controller 14 sets a reserve block storing therein no data as the transfer destination of data. The embodiments, however, are not limited to this manner. For example, the table controller 14 identifies a block having the longest life expectancy out of the blocks storing therein no data. The table controller 14 may notify the request arbitrator 13 of the physical block address indicating the identified block. The processing performed in such a manner makes it possible for the NAND controllers 6a to 6d to level the deterioration of the cells of the blocks included in the NAND devices 7a to 10a. As a result, the cells of the blocks included in the NAND devices 7a to 10a can be used until the end of life.

### 6. Data to be transferred

The NAND controllers 6a to 6d transfer data when the time stamp of the physical block storing therein the data serving as the object of the transfer determination is older than a certain threshold or the number of pieces of valid data in the physical block is smaller than a certain threshold. The embodiments, however, are not limited to this manner. The NAND controllers 6a to 6d may determine the transfer of data using any information or any conditions. For example, the NAND controllers 6a to 6d may transfer data when the free space of the NAND devices 7a to 10a is small and the number of pieces of valid data in the physical block is smaller than the certain threshold.

### 7. Differentiation between garbage collection and wear leveling in cyclic reference control

The NAND controllers 6a to 6d differentiate the cyclic reference control for garbage collection and the cyclic reference control for wear leveling and determine whether the physical page is set as the object of the transfer processing on the basis of the respective conditions. The embodiments, however, are not limited to this manner. For example, the NAND controllers 6a to 6d may perform the cyclic reference control for both of garbage collection and wear leveling concurrently when a certain time has elapsed or receiving an instruction from software, and may perform the cyclic reference control for only garbage collection at any timing. When receiving an instruction to perform the cyclic reference control during the cyclic reference control for both of garbage collection and wear leveling concurrently from any controller, the NAND controllers 6a to 6d may control such that the cyclic reference control for both of garbage collection and wear leveling is switched to the cyclic reference control for only garbage collection.

### 8. Computer Program

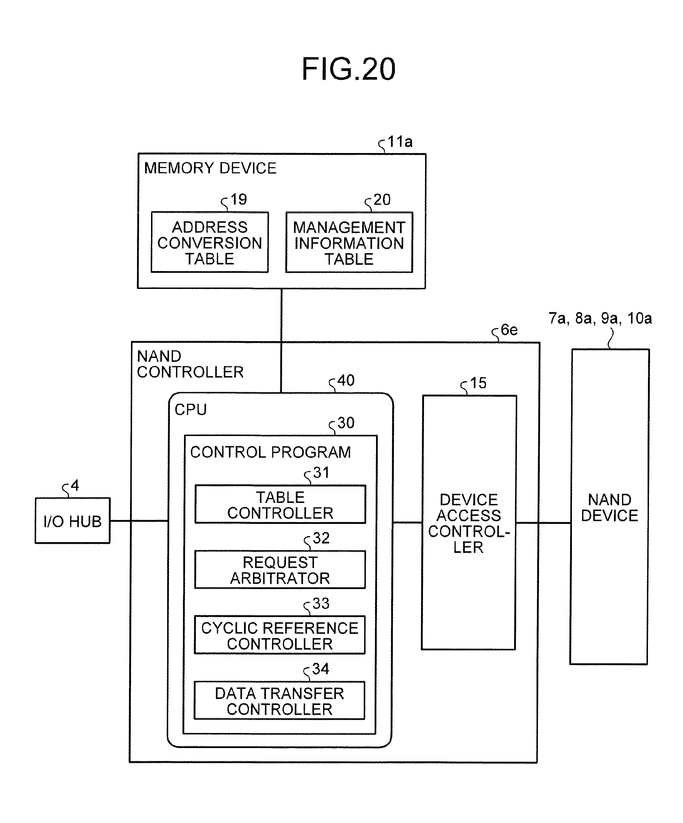

The functions demonstrated by the NAND controllers 6a to 6d described in the above embodiments may be achieved by the arithmetic processing units in the NAND controllers 6a to 6d executing a preinstalled control program. The following describes an example of a computer that executes a control program having the same functions as those of the NAND controller 6a with reference to FIG. 20.

FIG. 20 is a schematic diagram explaining an example of the NAND controller that executes the control program. As illustrated in FIG. 20, a NAND controller 6e includes a CPU 40, and a device access controller 15. The CPU 40 is connected to a memory device 11a. The memory device 11a may be a memory built in the NAND controller 6e.

The memory device 11a preliminarily stores therein the address conversion table 19 and the management information table 20. The CPU 40 reads, loads, and executes a control program 30. As a result, the control program 30 functions in the following manner. The control program 30 causes the CPU 40 to operate as a table controller 31, a request arbitrator 32, a cyclic reference controller 33, and a data transfer controller 34. The table controller 31, the request arbitrator 32, the cyclic reference controller 33, and the data transfer controller 34 function in the same manner as the table controller 14, the request arbitrator 13, the cyclic reference controller 17, and the data transfer controller 18, respectively, that are illustrated in FIG. 6.

The NAND controller 6e may execute the control program 30 using an arithmetic unit such as a micro processing unit (MPU) or a field programmable gate array (FPGA) instead of the CPU. The control program 30 may be stored in the memory device 11a or in the NAND devices 7a to 10a, or may be executed by the CPU 40 in another manner. For example, the control program is stored in a "portable physical medium" such as a flexible disk (what is called an FD), a compact disc (CD)-ROM, a digital versatile disc (DVD), a magnet-optical disc, and an IC card.

The NAND controller 6e may acquire the control program 30 from such portable physical medium through the CPUs 3a and 3b and execute them. The programs stored in another computer or a server may be acquired through a public line, the Internet, a local area network (LAN), or a wide area network (WAN) and may be executed.

At least one of the embodiments can reduce the circuit scale of the NAND controller.

## Claims

1. An information processing apparatus (1), comprising:
a storage device (7a; 8a; 9a; 10a) that includes a plurality of storage areas;
a selection unit (17) that selects a logical address from among logical addresses identifying data stored in the storage device (7a; 8a; 9a; 10a);
an acquisition unit (14) that acquires a physical address associated with the logical address selected by the selection unit (17), from a conversion table (19) storing therein the logical addresses identifying data stored in the storage device (7a; 8a; 9a; 10a) and physical addresses identifying the storage areas in which the data is stored in association with each other;
a determination unit (17) that determines, using a predetermined condition, whether the data stored in the storage area indicated by the physical address acquired by the acquisition unit (14) is to be transferred;
a transfer unit (18) that transfers the data stored in the storage area indicated by the physical address acquired by the acquisition unit (14) to another storage area when the determination unit (17) determines that the data is to be transferred; and
an updating unit (14) that updates the physical address associated with the logical address selected by the selection unit (17) out of the physical addresses stored in the conversion table (19) to the physical address indicating the other storage area.

2. The information processing apparatus according to claim 1, wherein the selection unit (17) selects the logical addresses of all of the data stored in the storage unit (7a; 8a; 9a; 10a) in the order of numbers.

3. The information processing apparatus according to claim 2, wherein, when a certain time elapses from start of processing to select the logical addresses in the order of numbers, the selection unit (17) retains the last selected logical address to suspend the processing, and selects the logical addresses in the order of numbers from a logical address having a next number of the retained logical address when restarting the processing.

4. The information processing apparatus according to any one of claims 1 to 3, wherein the selection unit (17) divides the logical addresses of data stored in the storage device (7a; 8a; 9a; 10a) into a plurality of groups and performs the processing to select the logical addresses included in the groups in the order of numbers group by group.

5. The information processing apparatus according to any one of claims 1 to 4, wherein the determination unit (17) refers to, in a status control table that stores therein status information indicating whether data is written in all of a plurality of storage areas included in each block, the status information about a block including the storage area indicated by the physical address acquired by the acquisition unit (14), and determines, when the referred status information indicates that data is written in all of the storage areas included in the block, that the data stored in the storage area indicated by the physical address acquired by the acquisition unit (14) is to be transferred to another storage area.

6. The information processing apparatus according to any one of claims 1 to 5, wherein the determination unit (17) refers to, in a time management table (20) that stores therein time information indicating a time when data is written for each block including a plurality of storage areas, the time information about a block including the storage area indicated by the physical address acquired by the acquisition unit (14), and determines, when a difference between a time indicated by the referred time information and a current time is larger than a predetermined threshold, that the data stored in the storage area indicated by the physical address acquired by the acquisition unit (14) is to be transferred to another storage area.

7. The information processing apparatus according to any one of claims 1 to 6, wherein the determination unit (17) refers to, in a validity management table (20) that stores therein validity information indicating the number of pieces of valid data for each block including a plurality of storage areas, the validity information about a block including the storage area indicated by the physical address acquired by the acquisition unit (14), and determines, when the number of pieces of valid data indicated by the referred validity information is larger than a predetermined threshold, that the data stored in the storage area indicated by the physical address acquired by the acquisition unit (14) is to be transferred to another storage area.

8. A control circuit, comprising:
a selection unit (17) that selects a logical address from among logical addresses identifying data stored in a storage device (7a; 8a; 9a; 10a) including a plurality of storage areas;
an acquisition unit (14) that acquires a physical address associated with the logical address selected by the selection unit (17), from a conversion table (19) storing therein the logical addresses identifying data stored in the storage device (7a; 8a; 9a; 10a) and physical addresses identifying the storage areas in which the data is stored in association with each other;
a determination unit (17) that determines, using a predetermined condition, whether the data stored in the storage area indicated by the physical address acquired by the acquisition unit (14) is to be transferred;
a transfer unit (18) that transfers the data stored in the storage area indicated by the physical address acquired by the acquisition unit (14) to another storage area when the determination unit (17) determines that the data is to be transferred; and
an updating unit (14) that updates the physical address associated with the logical address selected by the selection unit (17) out of the physical addresses stored in the conversion table (19) to the physical address indicating the other storage area.

9. A control program that causes a computer to execute a process comprising:
selecting a logical address from among logical addresses identifying data stored in a storage device (7a; 8a; 9a; 10a) including a plurality of storage areas;
acquiring a physical address associated with the logical address selected at the selecting from a conversion table (19) storing therein the logical addresses identifying data stored in the storage device (7a; 8a; 9a; 10a) and physical addresses identifying the storage areas in which the data is stored in association with each other;
determining, using a predetermined condition, whether the data stored in the storage area indicated by the physical address acquired at the acquiring is to be transferred;
transferring the data stored in the storage area indicated by the physical address acquired at the acquiring to another storage area when it is determined that the data is to be transferred; and
updating the physical address associated with the logical address selected at the selecting out of the physical addresses stored in the conversion table (19) to the physical address indicating the other storage area.

10. A control method that is performed by an information processing apparatus, the control method comprising:
selecting a logical address from among logical addresses identifying data stored in a storage device (7a; 8a; 9a; 10a) including a plurality of storage areas;
acquiring a physical address associated with the logical address selected at the selecting from a conversion table (19) storing therein the logical addresses identifying data stored in the storage device and physical addresses identifying the storage areas in which the data is stored in association with each other;
determining, using a predetermined condition, whether the data stored in the storage area indicated by the physical address acquired at the acquiring is to be transferred;
transferring the data stored in the storage area indicated by the physical address acquired at the acquiring to another storage area when it is determined that the data is to be transferred; and
updating the physical address associated with the logical address selected at the selecting out of the physical addresses stored in the conversion table (19) to the physical address indicating the other storage area.
